# EUROPEAN PATENT SPECIFICATION

(11) **EP 2 131 074 B1**
(45) Date of publication and mention of the grant of the patent: **12.10.2011**
(21) Application number: 09251318.3
(22) Date of filing: 14.05.2009
(51) Int. Cl.: F16H 61/662

(54) **Vehicle having electronic continuously variable transmission**
Fahrzeug mit elektronischem Riemenantrieb
Véhicule doté d'une transmission variable continue électronique

(30) Priority: 23.05.2008 JP 2008134987
(43) Date of publication of application: 09.12.2009
(73) Proprietor: Yamaha Hatsudoki Kabushiki Kaisha, Iwata-shi, Shizuoka 438-8501 (JP)
(72) Inventor: Ishioka, Kazutoshi, Shizuoka-ken 438-8501 (JP)
(74) Representative: Grünecker, Kinkeldey, Stockmair & Schwanhäusser Anwaltssozietät

(56) References cited:
- EP-A- 1 400 728
- EP-A- 1 612 456
- US-A1- 2006 068 972

## Description

The present invention relates to a vehicle according to the preamble of independent claim 1.
Such a vehicle can be taken from the prior art document EP 1 612 456 A2.

Continuously variable transmissions of a vehicle and transmission control apparatuses for controlling the continuously variable transmissions that control a transmission ratio within a control range between predetermined upper limit value and lower limit value are known. In addition, like a transmission control apparatus described in Japanese Unexamined Patent Application Publication No. 10-169770 , transmission control apparatuses for controlling the continuously variable transmissions that correct a predetermined upper limit value and a lower limit value of the control amount of operation are known.

The transmission control apparatus described in Japanese Unexamined Patent Application Publication No. 10-169770 performs control for correcting the upper limit value and the lower limit value each time an engine is started. By correcting the predetermined upper limit value and the lower limit, the continuously variable transmission can provide a stable transmission ratio at all times. Therefore, according to the continuously variable transmission described in the Japanese Unexamined Patent Application Publication No. 10-169770 , a precise control can be provided by the transmission at all times regardless of a year-to-year change in the parts of the transmission and a change in the use environment.

However, the control for correcting the upper limit value and lower limit value is performed each time the engine is started. Therefore, the vehicle is not permitted to start until the control for correcting the upper limit value and lower limit value is completed. For this reason, even when a driver wants to start the vehicle immediately, the vehicle may not start. Thus, smooth start may not be achieved.

Accordingly, an object of the present invention is to provide a vehicle as indicated above, which is capable of providing a stable transmission ratio and allowing a driver to smoothly start the vehicle as desired by the driver.

According to the present invention said object is solved by a vehicle having the features of independent claim 1. Preferred embodiments are laid down in the dependent claims.

Accordingly, it is provided a vehicle includes an engine for generating a driving force, a belt-drive continuously variable transmission including a stationary sheave body and a movable sheave body, where the movable sheave body displaceably faces the stationary sheave body, a drive wheel, where the driving force of the engine is transferred to the drive wheel via the belt-drive continuously variable transmission, an actuator for moving the movable sheave body, a control unit for controlling the actuator, a sheave position sensor for detecting a position of the movable sheave body, and a main switch. In addition, the control unit includes a storage unit for storing an origin location of the movable sheave body, a state determination unit for detecting or estimating that the driving force of the engine is not transferred to the drive wheel, an origin location moving unit for controlling movement of the movable sheave body towards the origin location when detecting or estimating that the main switch is turned OFF and the driving force of the engine is not transferred to the drive wheel, and an origin location setting unit for performing learning by causing the storage unit to store, as a new origin location, the current origin location detected by the sheave position sensor on the basis of the control of the movable sheave body performed by the origin location moving unit.

Accordingly, the movement of the primary movable sheave body by the actuator does not interfere with the start of the vehicle. Therefore, a stable transmission ratio can be obtained. In addition, a smooth start of the vehicle as desired by a driver can be provided.

Embodiments of the invention are described below, by way of example only, with reference to the drawings.
Fig. 1 is a side view of a two-wheeled motor vehicle to which the present invention is applied.
Fig. 2 is a cross-sectional view of a power unit.
Fig. 3 is a partial cross-sectional view illustrating the structure of a transmission.
Fig. 4 is a schematic illustration of a steering control handle.
Fig. 5 is a block diagram illustrating control performed by the transmission.
Fig. 6 illustrates an example of a target engine rotation speed determination map.
Fig. 7 is a block diagram illustrating a normal control performed by the transmission.
Fig. 8 is a block diagram illustrating an origin location learning control performed by the transmission according to a first embodiment.
Fig. 9 is a flowchart illustrating the start of the origin location learning control performed by the transmission according to the first embodiment.
Fig. 10 is a flowchart illustrating the origin location learning control performed by the transmission.
Fig. 11 is a flowchart illustrating the origin location learning control performed by the transmission.
Fig. 12 is a block diagram illustrating an origin location learning control performed by a transmission according to a second embodiment.
Fig. 13 is a flowchart illustrating the start of the origin location learning control performed by the transmission according to the second embodiment.
Fig. 14 is a block diagram illustrating an origin location learning control performed by a transmission according to a first modification.

While the invention is susceptible to various modifications and alternative forms, specific embodiments are shown by way of example in the drawings and are herein described in detail. It should be understood, however, that the drawings and detailed description are not intended to limit the invention to the particular form disclosed, but on the contrary, the invention is to cover all modifications, equivalents and alternatives falling within the spirit and scope of the present invention as defined in the appended claims.

### Detailed Description

### First Embodiment

### (Configuration of Two-wheeled Motor Vehicle 1)

### - Schematic Configuration of Two-wheeled Motor Vehicle 1 -

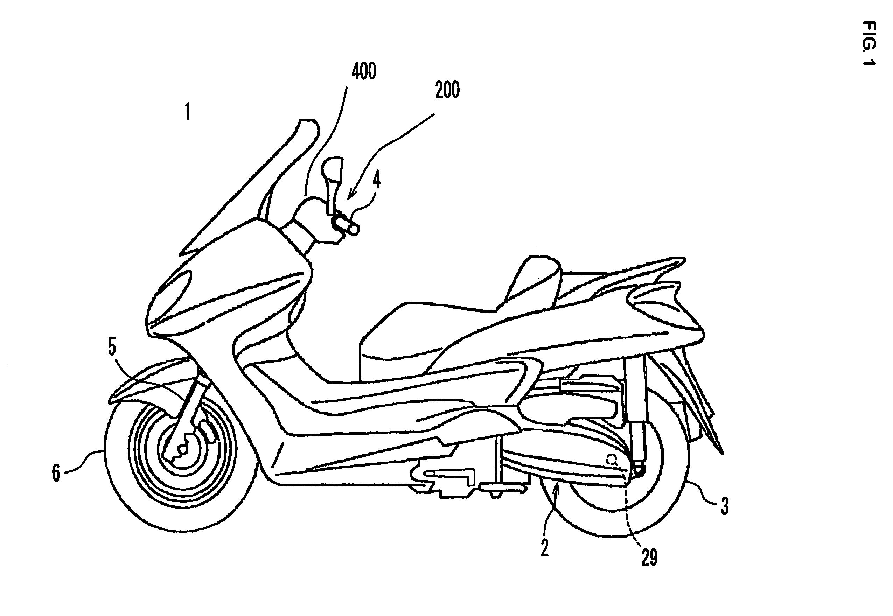

An embodiment of the present invention is described in detail below with reference to a two-wheeled motor vehicle 1 shown in Fig. 1. As shown in Fig. 1, the two-wheeled motor vehicle 1 includes a body frame (not shown). The body frame includes a power unit 2 mounted thereon. A rear wheel 3 is disposed on the rear end of the power unit 2. According to the present embodiment, the rear wheel 3 serves as a drive wheel, which is driven using a drive power of the power unit 2.

The body frame further includes a head pipe (not shown) extending from a steering control handle 4 downwards. The upper end of the head pipe is covered by a head pipe cover 400. The surface of the head pipe cover 400 serves as a meter panel 200 as well. The meter panel 200 displays information required for driving the two-wheeled motor vehicle 1. A front fork 5 is connected to the lower end of the head pipe. A front wheel 6 is rotatably attached to the lower end portion of the front fork 5. The front wheel 6 is not connected to the power unit 2. Thus, the front wheel 6 serves as a follower wheel. Note that, according to the present embodiment, the terms "forward, backward, rightward, leftward, upward, and downward directions" refer to those directions viewed from a rider of the two-wheeled motor vehicle 1.

### - Configuration of Power Unit 2 -

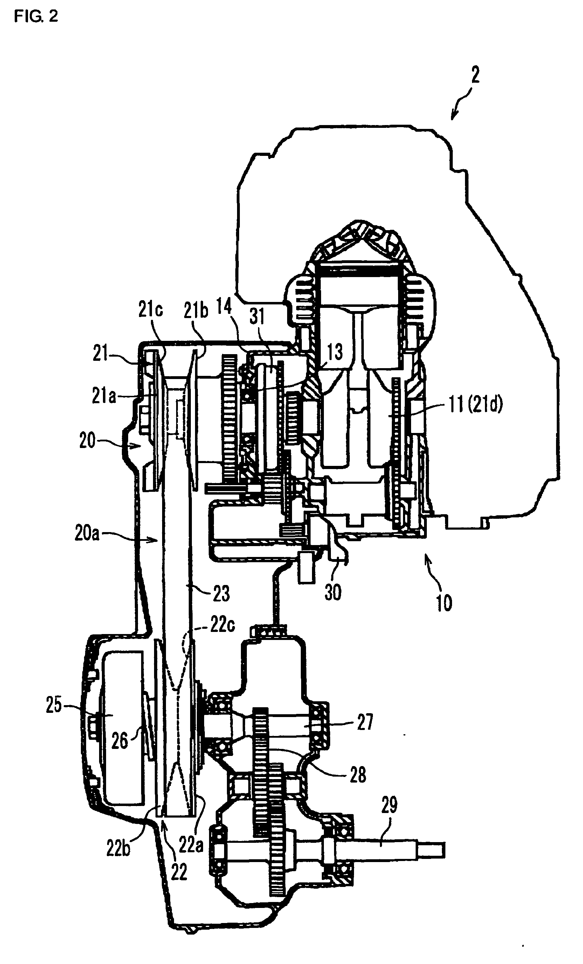

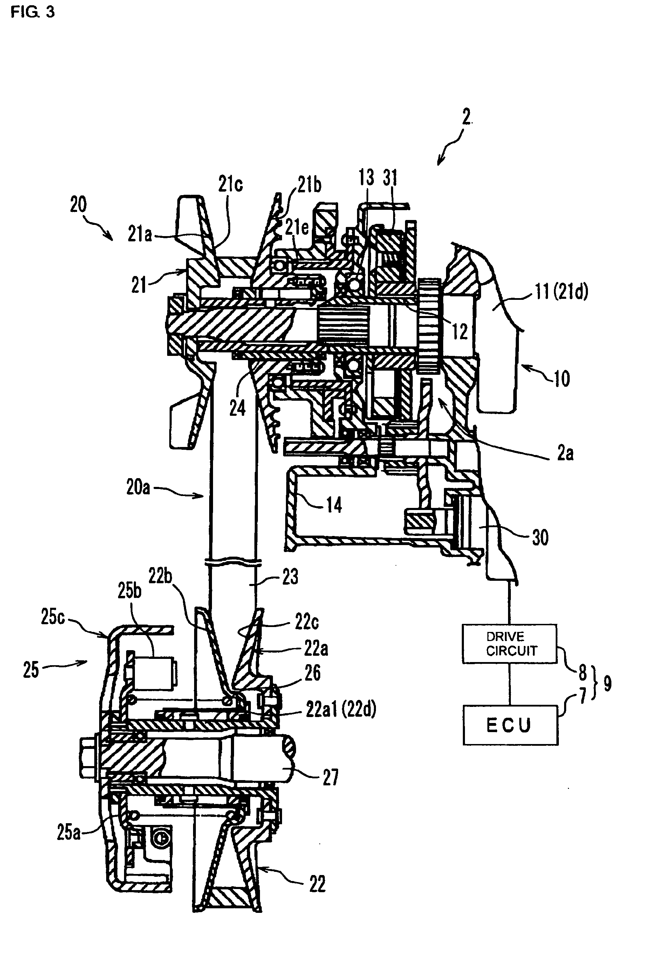

The configuration of the power unit 2 is described next with reference to Figs. 2 and 3.

### {Configuration of Engine 10}

As shown in Figs. 2 and 3, the power unit 2 includes an engine (an internal-combustion engine) 10 and a transmission 20. According to the present embodiment, the engine 10 is a forcedly-cooled four-cycle engine. However, the engine 10 may be of any type. For example, the engine 10 may be a water-cooled engine. In addition, the engine 10 may be a two-cycle engine.

As shown in Fig. 3, the engine 10 includes a crankshaft 11. A sleeve 12 is spline-engaged with the outer peripheral surface of the crankshaft 11. The sleeve 12 is rotatably supported by a housing 14 via a bearing 13. A one-way clutch 31 connected to a motor 30 is attached to the outer peripheral surface of the sleeve 12. The motor 30 serves as an actuator.

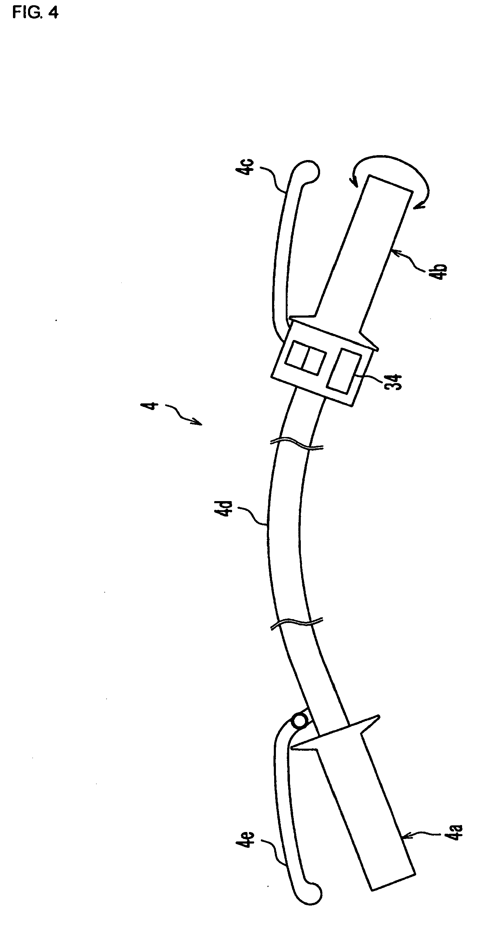

As shown in Fig. 4, the steering control handle 4 of the two-wheeled motor vehicle 1 includes an accelerator grip 4b operated by the hand of a driver. The accelerator grip 4b is rotatably controllable between a full throttle position and an idle position. In the present embodiment, a rotational position of the accelerator grip 4b from the idle position, that is, the degree of accelerator opening, defines an operational amount of the accelerator grip 4b. In general, when the vehicle is accelerated, the degree of accelerator opening is increased. In contrast, when the vehicle is decelerated, the degree of accelerator opening is decreased.

### {Configuration of Power Transfer Mechanism 2a}

The power unit 2 further includes a power transfer mechanism 2a. As described below, the transmission 20 of the power unit 2 is a belt-drive electronic continuously variable transmission. The power transfer mechanism 2a is a mechanism that transfers a driving force from the motor 30 to the belt-drive continuously variable transmission. The power transfer mechanism 2a includes at least the motor 30, the crankshaft 11, and the one-way clutch 31 linked with each other. According to the present embodiment, the power transfer mechanism 2a is a gear-based mechanism. However, the power transfer mechanism 2a may operate on the basis of a hydraulic pressure-based mechanism or a link mechanism other than the gear-based mechanism. Through the operation of the power transfer mechanism 2a, the drive force of the motor 30 is transferred to the crankshaft 11. The motor 30 functions as an actuator of the transmission 20. In addition, the motor 30 can function as a starter motor.

### {Configuration of Transmission 20}

As shown in Fig. 3, the transmission 20 includes a transmission mechanism 20a and a control unit 9 that controls the transmission mechanism 20a. The control unit 9 includes an ECU 7 serving as a computing unit and a drive circuit 8 serving as a drive unit. According to the present embodiment, the transmission mechanism 20a is a belt-drive ECVT. The belt of the ECVT may be a resin belt or a metal belt. Alternatively, the belt may be of any type.

The transmission mechanism 20a includes a primary sheave 21, a secondary sheave 22, and a V-belt 23. The V-belt 23 is wound around the primary sheave 21 and the secondary sheave 22 and extends therebetween. The V-belt 23 has a substantially V shape in cross section.

The primary sheave 21 is connected with the crankshaft 11 serving as an input shaft 21d. The primary sheave 21 rotates together with the crankshaft 11. The primary sheave 21 includes a primary stationary sheave body 21a and a primary movable sheave body 21b. The primary stationary sheave body 21a is secured to one end of the crankshaft 11. The primary movable sheave body 21b is disposed so as to face the primary stationary sheave body 21a. The primary movable sheave body 21b is movable along an axis direction of the crankshaft 11. A surface of the primary stationary sheave body 21a and a surface of the primary movable sheave body 21b facing each other form a belt groove 21c around which the V-belt 23 is wrapped and runs. The width of the belt groove 21c increases towards the outer side in the radial direction of the primary sheave 21.

As shown in Fig. 3, the primary movable sheave body 21b includes a boss portion 21e having a cylindrical shape into which the crankshaft 11 is inserted and disposed. A slider 24 having a cylindrical shape is secured to the inner surface of the boss portion 21e. The primary movable sheave body 21b coupled with the slider 24 is movable in the axis direction of the crankshaft 11. Accordingly, the width of the belt groove 21c is variable.

The transmission mechanism 20a further includes a stopper (not shown) that restricts the movement of the primary movable sheave body 21b along the axis of the input shaft 21d. The stopper is located at a position (an origin location P₀) at which the transmission 20 is in contact with the stopper when an origin location learning control is performed, as described below. For example, protruding obstacles formed on the housing 14 and the power transfer mechanism 2a may function as the stopper when they are in contact with each other. Alternatively, the stopper may be activated in the case that a mechanical operation performed in the power transfer mechanism 2a is restricted.

The width of the belt groove 21c of the primary sheave 21 can be changed by moving the primary movable sheave body 21b in the axis direction of the crankshaft 11 by means of the motor 30. That is, the transmission 20 is an ECVT in which the transmission ratio is electronically controlled. According to the present embodiment, the motor 30 is driven using pulse width modulation (PWM). However, the method for driving the motor 30 is not limited to PWM. Any method for driving the motor 30 can be used. For example, the motor 30 may be driven using pulse-amplitude modulation. In addition, the motor 30 may be a stepping motor. While the present embodiment is described with reference to the motor 30 for an actuator, an actuator other than the motor 30 may be used. For example, a hydraulic actuator can be used in place of the motor 30.

The secondary sheave 22 is disposed behind the primary sheave 21. The secondary sheave 22 is attached to a secondary sheave shaft 27 via a clutch 25. More specifically, the secondary sheave 22 includes a secondary stationary sheave body 22a and a secondary movable sheave body 22b. The secondary movable sheave body 22b faces the secondary stationary sheave body 22a. The secondary stationary sheave body 22a has a cylindrical portion 22a1. According to the present embodiment, the cylindrical portion 22a1 serves as an output shaft 22d of the transmission 20. The secondary stationary sheave body 22a is connected to the secondary sheave shaft 27 via the clutch 25. The secondary movable sheave body 22b is movable along the axis direction of the secondary sheave shaft 27. A surface of the secondary stationary sheave body 22a and a surface of the secondary movable sheave body 22b facing each other form a belt groove 22c around which the V-belt 23 is wrapped and runs. The width of the belt groove 22c increases towards the outer side in the radial direction of the secondary sheave 22.

The secondary movable sheave body 22b is urged by a spring 26 in a direction to reduce the width of the belt groove 22c. Accordingly, when the motor 30 is driven so that the with of the belt groove 21c of the primary sheave 21 is reduced and the winding diameter of the V-belt 23 running on the primary sheave 21 is increased, the V-belt 23, in the secondary sheave 22, is pulled towards the inner side of the radial direction of the secondary sheave 22. Therefore, the secondary movable sheave body 22b is moved in a direction to increase the belt groove 22c against the urging force of the spring 26. Thus, the winding diameter of the V-belt 23 running on the secondary sheave 22 is reduced. As a result, the transmission ratio of the transmission mechanism 20a is changed.

The clutch 25 is engaged and disengaged in accordance with the rotation speed of the cylindrical portion 22a1 serving as the output shaft 22d included in the secondary stationary sheave body 22a. That is, when the rotation speed of the output shaft 22d is lower than a predetermined rotation speed, the clutch 25 is disengaged. Accordingly, the rotation of the secondary stationary sheave body 22a is not transferred to the secondary sheave shaft 27. In contrast, when the rotation speed of the output shaft 22d is higher than or equal to the predetermined rotation speed, the clutch 25 is engaged. Accordingly, the rotation of the secondary stationary sheave body 22a is transferred to the secondary sheave shaft 27.

### {Configuration of Clutch 25}

As shown in Fig. 3, the clutch 25 is a centrifugal clutch. The clutch 25 includes a centrifugal plate 25a, a centrifugal weight 25b, and a clutch housing 25c. The centrifugal plate 25a rotates together with the secondary stationary sheave body 22a. That is, the centrifugal plate 25a rotates together with the output shaft 22d. The centrifugal weight 25b is supported by the centrifugal plate 25a in a movable manner in the radial direction of the centrifugal plate 25a. The clutch housing 25c is secured to one end of the secondary sheave shaft 27. A speed reduction mechanism 28 is connected to the secondary sheave shaft 27. The secondary sheave shaft 27 is connected to an axle 29 via the speed reduction mechanism 28. The speed reduction mechanism 28 changes the rotation speed of the output shaft 22d to a predetermined rotation speed. The rotation of the output shaft 22d is transferred to the axle 29 via the speed reduction mechanism 28. The rear wheel 3 is attached to the axle 29. In this way, the clutch housing 25c is connected to the rear wheel 3 serving as a drive wheel via the secondary sheave shaft 27, the speed reduction mechanism 28, and the axle 29.

The clutch housing 25c is engaged and disengaged with the centrifugal plate 25a in accordance with the rotation speed of the output shaft 22d. More specifically, when the rotation speed of the output shaft 22d is higher than or equal to a predetermined rotation speed, the centrifugal weight 25b is moved towards the outer side in the radial direction of the centrifugal plate 25a by a centrifugal force and is brought into contact with the clutch housing 25c. Accordingly, the centrifugal plate 25a is engaged with the clutch housing 25c. When the centrifugal plate 25a is engaged with the clutch housing 25c, the rotation of the output shaft 22d is transferred to the rear wheel 3 via the clutch housing 25c, the secondary sheave shaft 27, the speed reduction mechanism 28, and the axle 29. However, when the rotation speed of the output shaft 22d is lower than the predetermined rotation speed, the centrifugal force applied to the centrifugal weight 25b is reduced. Thus, the centrifugal weight 25b is moved away from the clutch housing 25c. Therefore, the rotation of the output shaft 22d is not transferred to the clutch housing 25c. As a result, the rear wheel 3 does not rotate.

Note that the clutch 25 is not limited to a centrifugal clutch. For example, the clutch 25 may be a friction clutch other than a centrifugal clutch. In addition, the clutch 25 may be a manual clutch. In such a case, for example, as shown in Fig. 4, a lever 4e provided to the steering control handle 4 functions as a clutch lever. In this case, the engagement and disengagement of the clutch is performed by using the clutch lever 4e.

### (Control System of Two-wheeled Motor Vehicle 1)

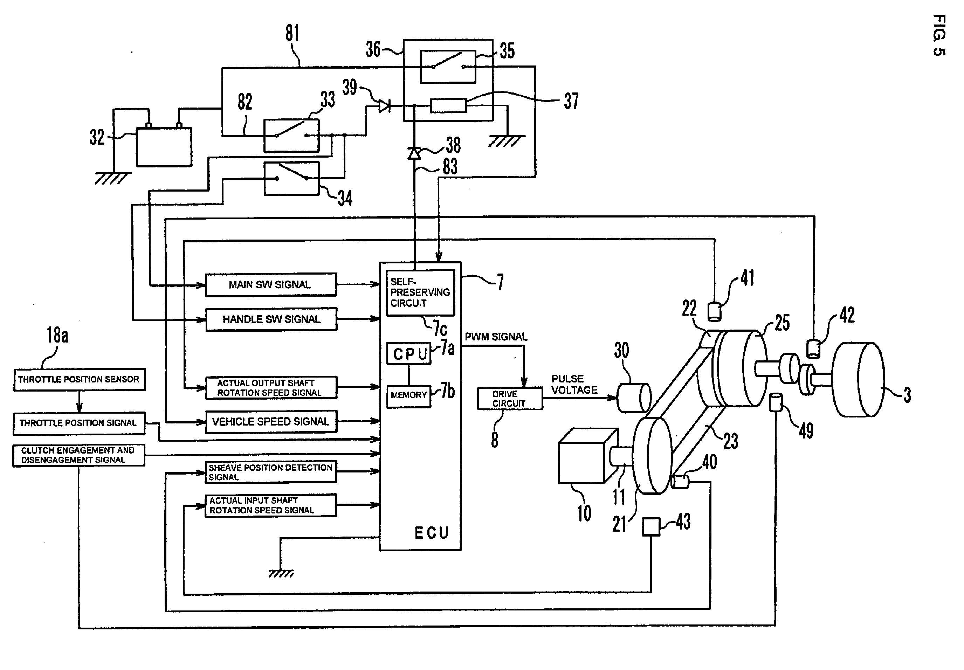

A control system of the two-wheeled motor vehicle 1 is described in detail next with reference to Fig. 5.

### - Outline of Control System of Two-wheeled Motor Vehicle 1 -

As shown in Fig. 5, a sheave position sensor 40 is connected to the ECU 7. The sheave position sensor 40 detects the position of the primary movable sheave body 21 b of the primary sheave 21 on the input shaft 21d. The sheave position sensor 40 outputs the detected position of the primary movable sheave body 21 b to the ECU 7 in the form of a sheave position detection signal. Note that the sheave position sensor 40 can be formed from, for example, a potentiometer.

In addition, a primary sheave rotation sensor 43 serving as an input shaft rotation speed sensor, a secondary sheave rotation sensor 41 serving as an output shaft rotation speed sensor, and a vehicle speed sensor 42 are connected to the ECU 7. The primary sheave rotation sensor 43 detects the rotation speed of the primary sheave 21, that is, the rotation speed of the input shaft 21d. The primary sheave rotation sensor 43 outputs the detected rotation speed of the input shaft 21d to the ECU 7 in the form of an actual input shaft rotation speed signal. The secondary sheave rotation sensor 41 detects the rotation speed of the secondary sheave 22, that is, the rotation speed of the output shaft 22d. The secondary sheave rotation sensor 41 outputs the detected rotation speed of the output shaft 22d to the ECU 7 in the form of an actual output shaft rotation speed signal. The vehicle speed sensor 42 detects the rotation speed of the rear wheel 3. The vehicle speed sensor 42 outputs a vehicle speed signal based on the detected rotation speed to the ECU 7.

The ECU 7 is connected to a handle switch provided on the steering control handle 4. When operated by a rider, the handle switch outputs a handle SW signal. A starter switch 34 is attached to the steering control handle 4 (refer to Fig. 4). When an input operation is performed on the starter switch 34, a starter signal is output from the starter switch 34 in the form of the handle SW signal. After an input operation is performed on a main switch 33, the engine 10 enters a state in which it is ready to be started. At that time, if the starter switch 34 is operated, the ECU 7 controls the drive circuit 8 so that the motor 30 operates. The operation of the motor 30 starts the engine 10.

In addition, when the rider turns ON or OFF the main switch 33, the ECU 7 receives a main SW signal.

Furthermore, as noted above, a throttle position sensor 18a outputs a throttle position signal to the ECU 7.

The ECU 7 includes a CPU (Central Processing Unit) 7a serving as a computing unit and a memory 7b connected to the CPU 7a. The memory 7b stores a variety of settings, such as a target engine rotation speed map 70 and the origin location P₀, which are described in more detail below.

### - Relay Circuit -

The ECU 7 further includes a self-preserving circuit 7c. The self-preserving circuit 7c is a circuit used for preserving power supply provided to the ECU 7 even when the driver turns off the main switch 33 while driving the vehicle.

Electrical power is supplied to the ECU 7 from a main power supply 32 via a line 81. The line 81 is independent from the main switch 33 and supplies electrical power from the main power supply 32 to the ECU 7.

The line 81 includes a relay circuit 36 having a self-preserving function. The relay circuit 36 includes a relay switch 35 that controls power supply from the main power supply 32 to the ECU 7 and a switch control device 37 that controls ON or OFF of the relay switch 35. A line 82 connected to the main switch 33 is disposed between the main power supply 32 and the switch control device 37. A voltage output from the main power supply 32 is applied to the switch control device 37 via the line 82 in response to the operation performed on the main switch 33.

In addition, a line 83 is disposed between the switch control device 37 and the self-preserving circuit 7c. In the line 83, a voltage is applied to the switch control device 37 even after the main switch 33 is turned OFF. Thus, the relay switch 35 remains in a closed (switch-ON) state. When received electrical power from the main power supply 32 via the line 81, the self-preserving circuit 7c applies a voltage to the switch control device 37 via the line 83. That is, the voltage is applied to the switch control device 37 via the following two lines: the line 82 through the main switch 33 and the line 83 through the self-preserving circuit 7c.

The line 83 includes a diode 38. The diode 38 prevents backward flow of an electrical current into the self-preserving circuit 7c. In addition, the diode 38 prevents backward flow of an electrical current into the self-preserving circuit 7c via the line 83 when the main switch 33 is turned ON or OFF. In addition, a diode 39 is provided to a portion of the line 82 located between the main switch 33 and the switch control device 37. The diode 39 prevents backward flow of an electrical current from the line 83 to the main switch 33 when the main switch 33 is turned OFF.

Furthermore, the switch control device 37 maintains the relay switch 35 in a closed (switch-ON) state when a voltage is applied from either one of the line 82 and the line 83. However, the switch control device 37 maintains the relay switch 35 in an open (switch-OFF) state when a voltage is not applied from either of the line 82 and the line 83.

### - Control of Transmission 20 -

A method for controlling the transmission 20 according to the present embodiment is described next. The transmission 20 performs control using at least the following two methods: normal control and origin location learning control described below. The normal control is performed when the two-wheeled motor vehicle 1 moves. In contrast, the origin location learning control is performed when the main switch 33 is switched from ON to OFF and it is detected or estimated that the driving force of the engine 10 is not transferred to the rear wheel 3.

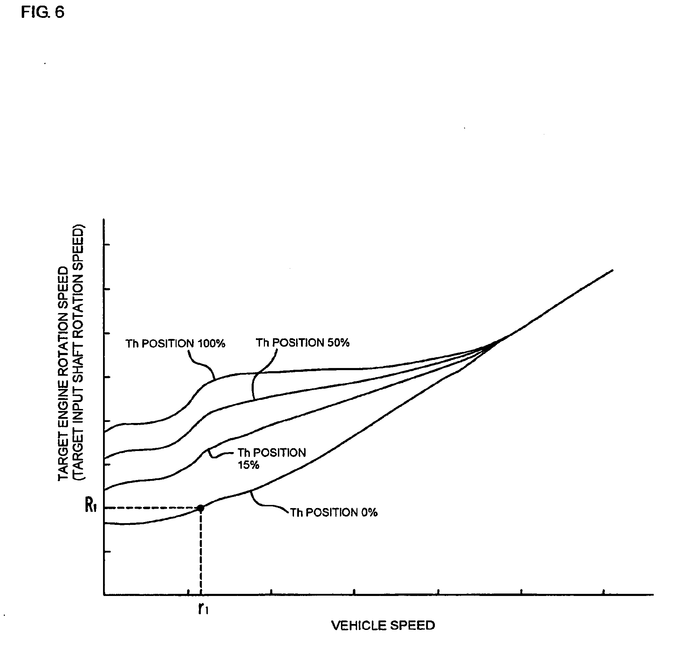

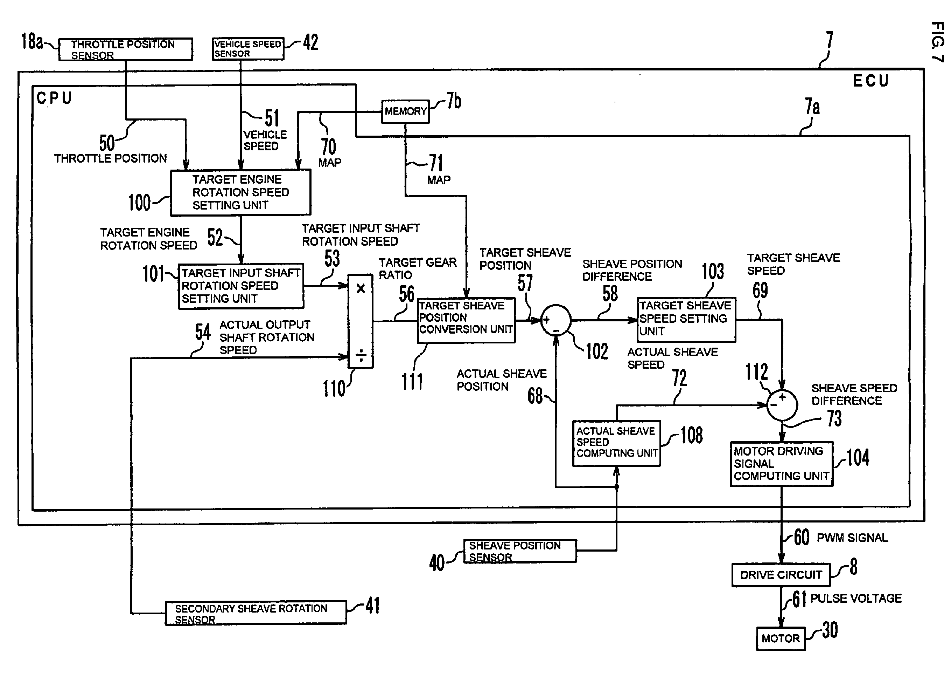

An example of a method for determining the transmission ratio of the transmission 20 in the normal control is described first. As shown in Fig. 7, the memory 7b stores the target engine rotation speed map 70 and a target sheave location map 71. For example, as shown in Fig. 6, the target engine rotation speed map 70 defines a relationship between a vehicle speed and a target engine rotation speed at each throttle position. The target sheave location map 71 defines a relationship between a transmission ratio and a target sheave location of the primary movable sheave body 21b.

The target engine rotation speed is determined by a throttle position of the engine 10 detected by the throttle position sensor 18a and a vehicle speed detected by the vehicle speed sensor 42. First, a throttle position 50 is output from the throttle position sensor 18a to a target engine rotation speed setting unit 100 provided in the CPU 7a. A vehicle speed 51 is output from the vehicle speed sensor 42 to the target engine rotation speed setting unit 100. The target engine rotation speed setting unit 100 reads the target engine rotation speed map 70 from the memory 7b. For example, as shown in Fig. 6, if the throttle position is 0% and the vehicle speed is r₁, then a target engine rotation speed 52 is determined to be R₁. The target engine rotation speed setting unit 100 outputs the determined target engine rotation speed 52 to a target input shaft rotation speed setting unit 101.

For ease of description, in Fig. 6, only the relationships when the throttle positions (Th positions) are 0%, 15%, 50%, and 100% are illustrated.

The target input shaft rotation speed setting unit 101 computes a target input shaft rotation speed 53 from the input target engine rotation speed 52. That is, the target input shaft rotation speed setting unit 101 computes a target rotation speed of the input shaft 21d from the input target engine rotation speed 52. The target input shaft rotation speed setting unit 101 then outputs the computed target input shaft rotation speed 53 to a divider unit 110. According to the present embodiment, the crankshaft 11 of the engine 10 serves as the input shaft 21d, the target engine rotation speed 52 is equal to the target input shaft rotation speed 53. That is, the target input shaft rotation speed setting unit 101 directly outputs the target engine rotation speed 52 as the target input shaft rotation speed 53.

The divider unit 110 divides the target input shaft rotation speed 53 input from the target input shaft rotation speed setting unit 101 by an actual output shaft rotation speed 54 output from the secondary sheave rotation sensor 41 so as to compute a target transmission ratio 56. The divider unit 110 then outputs the computed target transmission ratio 56 to a target sheave position conversion unit 111.

The target sheave position conversion unit 111A determines a target sheave position 57 on the basis of the target transmission ratio 56 output from the divider unit 110. The target sheave position conversion unit 111 reads the target sheave location map 71 from the memory 7b. The target sheave location map 71 defines a relationship between the target transmission ratio 56 and the target sheave position 57. The target sheave position conversion unit 111 outputs the determined target sheave position 57 to a subtracter unit 102.

The subtracter unit 102 subtracts an actual sheave position 68 from the target sheave position 57 so as to obtain a sheave position difference 58. The subtracter unit 102 outputs the computed sheave position difference 58 to a target sheave speed setting unit 103.

The target sheave speed setting unit 103 computes a target sheave speed 69 corresponding to the input sheave position difference 58. The target sheave speed setting unit 103 then outputs the computed target sheave speed 69 to a subtracter unit 112. Here, the target sheave speed 69 represents a moving speed when the primary movable sheave body 21b is moved by a distance defined by the sheave position difference 58.

On the other hand, an actual sheave speed computing unit 108 provided in the CPU 7a computes an actual sheave speed 72 using the actual sheave position 68 output from the sheave position sensor 40. The actual sheave speed computing unit 108 then outputs the computed actual sheave speed 72 to the subtracter unit 112. Here, the actual sheave speed 72 represents the current moving speed of the primary movable sheave body 21b.

The subtracter unit 112 subtracts the actual sheave speed 72 from the target sheave speed 69 so as to obtain a sheave speed difference 73. The subtracter unit 112 then outputs the sheave speed difference 73 to a motor driving signal computing unit 104.

The motor driving signal computing unit 104 computes a PWM signal 60 and outputs the computed PWM signal 60 to the drive circuit 8. The drive circuit 8 applies, to the motor 30, a pulse voltage 61 in accordance with the input PWM signal 60. Thus, the primary movable sheave body 21b is driven, and therefore, the transmission ratio of the transmission 20 is changed.

As noted above, the primary movable sheave body 21b is moved along the input shaft 21d on the basis of the target sheave position 57 computed by the target sheave position conversion unit 111 and the target sheave speed 69 computed by the target sheave speed setting unit 103. The sheave position sensor 40 detects the position of the primary movable sheave body 21b along the axis direction of the crankshaft 11. At that time, in terms of the position of the primary movable sheave body 21b on the crankshaft 11 detected by the sheave position sensor 40, the position detected by the sheave position sensor 40 may be shifted from the actual position of the primary movable sheave body 21 b due to a year-to-year variation in the sensor. If such a shift occurs, the transmission ratio of the transmission 20 cannot precisely determine the transmission ratio when computing the transmission ratio using the computed target sheave position 57. As the year-to-year variation in the sensor increases, the transmission ratio of the transmission 20 is more significantly shifted from the required transmission ratio. In such a case, the driving performance of the two-wheeled motor vehicle 1 is decreased. As used herein, the term "year-to-year variation" is loosely used to describe any year-to-year variation, such as wear and tear of a gear used in a sensor and deterioration of an electrical system of a sensor.

Therefore, according to the present embodiment, when the main switch 33 is switched from ON to OFF and it is detected or estimated that the driving force of the engine 10 is not transferred to the rear wheel 3, the transmission 20 performs control in which the origin location P₀ of the primary movable sheave body 21b is examined and set. In this embodiment, this control in which the origin location P₀ of the primary movable sheave body 21b is examined and set is referred to as "origin location learning control".

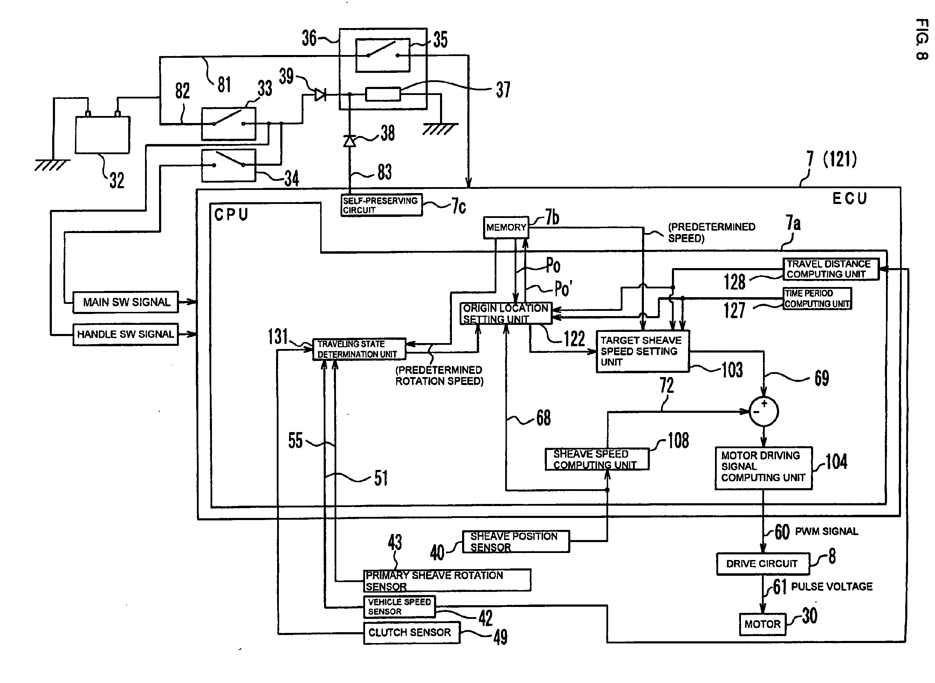

As shown in Fig. 8, the memory 7b stores the origin location P₀ of the primary movable sheave body 21b on the input shaft 21d at an initial setting. The initial setting of the origin location P₀ for the transmission 20 is performed when the two-wheeled motor vehicle 1 is shipped from a factory, a sensor including the sheave position sensor 40 is replaced with a new one, and the V-belt 23 is replaced with a new one. The origin location P₀ is set when the primary movable sheave body 21b is mechanically moved on the input shaft 21d and the movement of the primary movable sheave body 21b is restricted by the above-described stopper. That is, the origin location is a location at which the movement of the primary movable sheave body 21b is restricted by the above-described stopper. In addition, each time the origin location learning control is performed, the memory 7b stores the origin location P₀ detected through the origin location learning control as an update origin location P₀'. In the next origin location learning control, the memory 7b outputs the origin location P₀' stored in the previous origin location learning control to an origin location setting unit 122 as the origin location P₀.

According to the present embodiment, while the driving force of the engine 10 is being transferred to the rear wheel 3, which is a drive wheel, the origin location learning control is not performed. That is, according to the present embodiment, if the driving force of the engine 10 is not transferred to the rear wheel 3 in the case in which the main switch 33 is switched from OFF to ON, the transmission 20 starts the origin location learning control.

An example of the case where the driving force of the engine 10 is not transferred to the rear wheel 3 is the case where the actual input shaft rotation speed detected by the primary sheave rotation sensor 43 is not higher than or equal to a predetermined input shaft rotation speed (a predetermined engine rotation speed) Rp. When the actual input shaft rotation speed detected by the primary sheave rotation sensor 43 is not higher than or equal to the predetermined engine rotation speed Rp, it can be considered that the driving force of the engine 10 is not transferred to the rear wheel 3. According to the present embodiment, the ECU 7 includes a traveling state determination unit 131. The traveling state determination unit 131 receives an actual input shaft rotation speed 55 from the primary sheave rotation sensor 43. On the other hand, the predetermined engine rotation speed Rp is stored in the memory 7b. The traveling state determination unit 131 receives the predetermined engine rotation speed Rp from the memory 7b. The traveling state determination unit 131 compares the actual input shaft rotation speed 55 with the predetermined engine rotation speed Rp.

In addition, another example of the case where the driving force of the engine 10 is not transferred to the rear wheel 3 is the case where the rotation speed of the rear wheel 3 detected by the vehicle speed sensor 42 is not higher than or equal to a predetermined rotation speed Vp. If a rotation speed V of the rear wheel 3 detected by the vehicle speed sensor 42 is not higher than or equal to the predetermined rotation speed Vp, it is considered that the driving force of the engine 10 is not transferred to the rear wheel 3. The traveling state determination unit 131 receives a vehicle speed 51 from the vehicle speed sensor 42. On the other hand, the predetermined rotation speed Vp is stored in the memory 7b. The traveling state determination unit 131 receives the predetermined rotation speed Vp from the memory 7b. The traveling state determination unit 131 then compares the vehicle speed 51 with the predetermined rotation speed Vp.

Furthermore, another example of the case where the driving force of the engine 10 is not transferred to the rear wheel 3 is the case where a clutch sensor 49 detects a disengagement state of the clutch 25. When the disengagement state of the clutch 25 is detected, the driving force of the engine 10 is not transferred to the rear wheel 3. The traveling state determination unit 131 receives a signal based on the engagement and disengagement of the clutch 25 (a clutch engagement and disengagement signal) from the clutch sensor 49.

The target sheave speed setting unit 103 outputs the target sheave speed 69 to the subtracter unit 112 on the basis of the above-described comparison results or the clutch engagement and disengagement signal. The target sheave speed 69 used when the origin location learning control is performed is stored in the memory 7b. At that time, the target sheave speed 69 is set so that the primary movable sheave body 21b can be moved at a predetermined speed. In Fig. 8, the target sheave speed setting unit 103 receives, from the memory 7b, the target sheave speed 69 of that time as the predetermined speed.

According to the present embodiment, the type of signal used for comparison performed by the traveling state determination unit 131 may be any type. The traveling state determination unit 131 may use one of the vehicle speed 51 and the actual input shaft rotation speed 55 for comparison. Alternatively, the traveling state determination unit 131 may have a configuration that does not receive the clutch engagement and disengagement signal. Still alternatively, the traveling state determination unit 131 may have a configuration that uses the vehicle speed 51 and the actual input shaft rotation speed 55 for comparison and also receives the clutch engagement and disengagement signal.

In addition, according to the present embodiment, the origin location learning control is performed if the main switch 33 is switched from ON to OFF after the travel distance of the two-wheeled motor vehicle 1 measured from the latest performance of the origin location learning control or the initial setting of the origin location P₀ exceeds a predetermined travel distance. Alternatively, the origin location learning control is performed if the main switch 33 is switched from ON to OFF after a predetermined time has elapsed since the latest performance of the origin location learning control or the initial setting of the origin location P₀.

The ECU 7 includes a travel distance computing unit 128. The travel distance computing unit 128 computes the travel distance J on the basis of, for example, the vehicle speed detected by the vehicle speed sensor 42. As described below, if the travel distance J computed by the travel distance computing unit 128 exceeds a predetermined travel distance Jp and if, subsequently, the main switch 33 is switched from ON to OFF, the transmission 20 performs the origin location learning control.

A travel distance J computed by the travel distance computing unit 128 is input to the target sheave speed setting unit 103. If the travel distance J input from the travel distance computing unit 128 is smaller than the predetermined travel distance Jp, the target sheave speed setting unit 103 does not output the target sheave speed 69 to the motor driving signal computing unit 104. The travel distance J computed by a travel distance computing unit 128 is further input to the origin location setting unit 122. If the travel distance J input from the travel distance computing unit 128 is smaller than the predetermined travel distance Jp, the origin location setting unit 122 does not set the origin location P₀. In this way, if the travel distance J exceeds the predetermined travel distance Jp, the origin location learning control is performed. Note that the predetermined travel distance Jp is stored in, for example, the memory 7b.

The ECU 7 further includes a time period computing unit 127. The time period computing unit 127 has a clock function. The time period computing unit 127 computes a time period S when the power supply from the main power supply 32 stays ON and OFF. For example, as described below, the origin location learning control is performed when the time period S computed by the time period computing unit 127 exceeds a predetermined time period Sp and if, subsequently, the main switch 33 is switched from ON to OFF. Note that the time period S computed by the time period computing unit 127 is represented by hours, days, weeks, and months. Alternatively, the time period S computed by the time period computing unit 127 can be represented by a combination of hours, days, weeks, and months. For example, a combination of one month and two weeks can be used.

The time period S computed by the time period computing unit 127 is input to the target sheave speed setting unit 103. If time period S computed by the time period computing unit 127 is shorter than the predetermined time period Sp, the target sheave speed setting unit 103 does not output the target sheave speed 69 to the motor driving signal computing unit 104. The time period S computed by the time period computing unit 127 is further input to the origin location setting unit 122. If the time period S computed by the time period computing unit 127 is shorter than the predetermined time period Sp, the origin location setting unit 122 does not set the origin location P₀. In this way, for example, if the time period S exceeds the predetermined time period Sp, the origin location learning control is performed. Note that the predetermined time period Sp is stored in, for example, the memory 7b.

An exemplary control in which the origin location learning control is started and executed is described below with reference to the accompanying drawings.

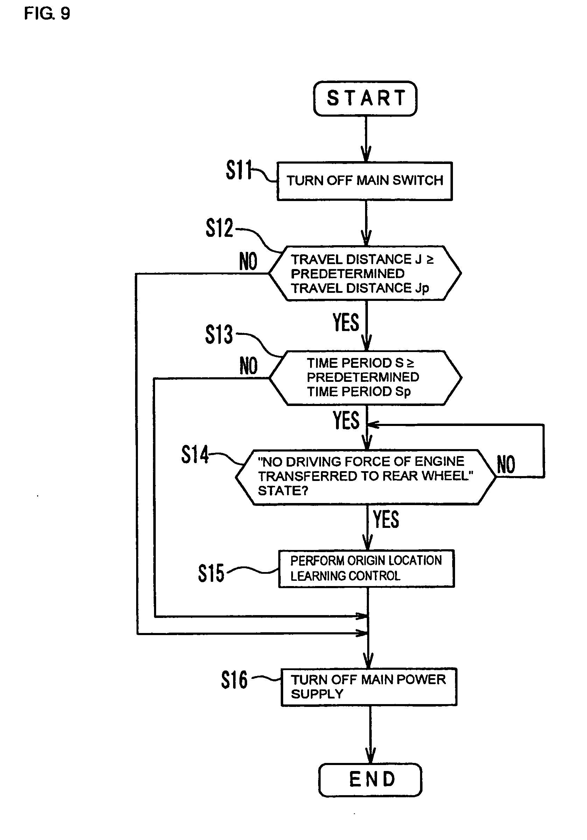

Fig. 9 illustrates a control flow in which the origin location learning control is started and executed when the main switch 33 is operated from OFF to ON in the case where the driving force of the engine 10 is not transferred to the rear wheel 3.

First, in step S11, the main switch 33 of the two-wheeled motor vehicle 1 is turned OFF through the operation performed by a rider. For example, the main switch 33 is disposed on the lower portion of the steering control handle 4 of the two-wheeled motor vehicle 1.

Subsequently, in step S12, it is determined whether the two-wheeled motor vehicle 1 has traveled the predetermined travel distance Jp since the previous origin location learning control was performed or the origin location P₀ was initially set. If, in step S12, it is determined that the two-wheeled motor vehicle 1 has traveled the predetermined travel distance Jp, the processing proceeds to step S13. However, if, in step S12, it is determined that the two-wheeled motor vehicle 1 has not traveled the predetermined travel distance Jp, the processing proceeds to step S16.

Subsequently, in step S13, it is determined whether the predetermined time period Sp has elapsed since the previous origin location learning control was performed or the origin location P₀ was initially set. If, in step S13, it is determined that the predetermined time period Sp has elapsed, the processing proceeds to step S14. However, if, in step S13, it is determined that the predetermined time period Sp has not elapsed yet, the processing proceeds to step S16.

Note that step S12 and step S13 may be reversed. Alternatively, step S12 and step S13 may be simultaneously performed. Still alternatively, only one of step S12 and step S13 may be performed.

Subsequently, in step S14, it is determined whether the driving force of the engine 10 is not transferred to the rear wheel 3. Whether the driving force of the engine 10 is not transferred to the rear wheel 3 is determined on the basis of the signals received by the traveling state determination unit 131, as described above. If, in step S14, it is determined that the driving force of the engine 10 is not transferred to the rear wheel 3, the processing proceeds to step S15. However, if, in step S14, it is determined that the driving force of the engine 10 is transferred to the rear wheel 3, the processing returns to step S14. That is, while transfer of the driving force of the engine 10 to the rear wheel 3 is being detected or estimated, the processing in step S14 is repeated a plurality of times, and therefore, the origin location learning control is not started.

In step S15, the origin location learning control is performed. After the origin location learning control has been performed and an update origin location P₀' described below has been set, the origin location learning control is completed. If the origin location learning control performed in step S15 is completed, the processing proceeds to step S16.

In step S16, supply of electrical power from the main power supply 32 is changed from ON to OFF. The supply of electrical power from the main power supply 32 is changed from ON to OFF through the operation of the relay circuit 36 after the main switch 33 is turned from ON to OFF.

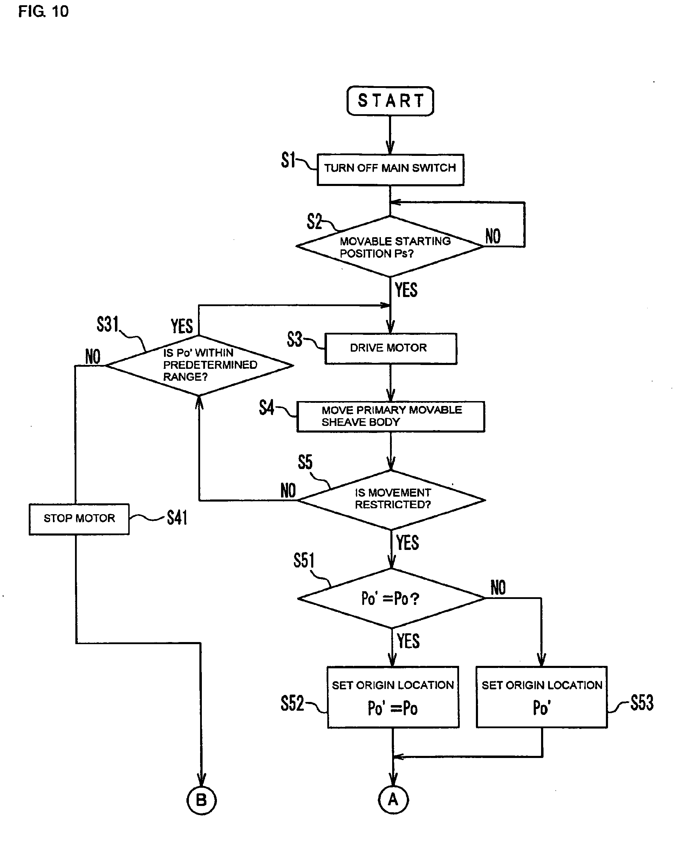

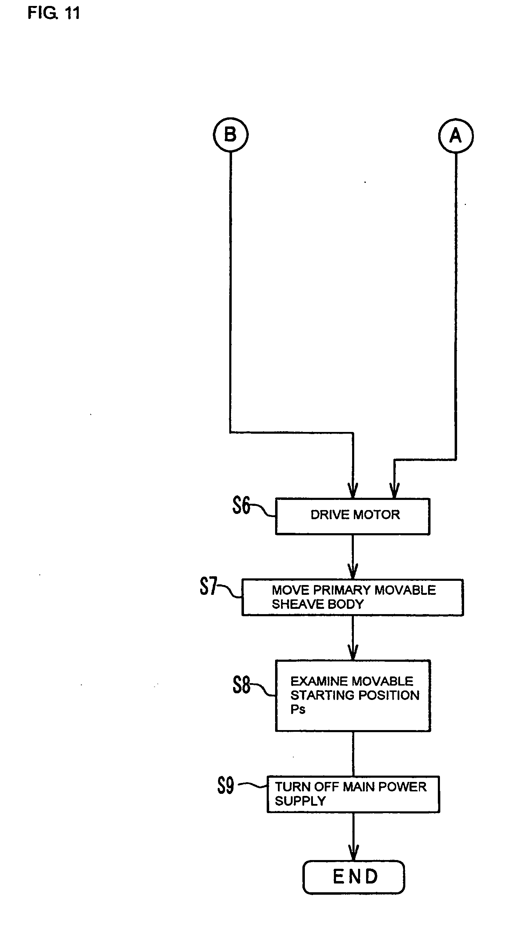

As described above, the origin location learning control is performed when the main switch 33 is changed from ON to OFF and it is detected or estimated that the driving force of the engine 10 is not transferred to the rear wheel 3. A detailed control flow of the origin location learning control performed when it is detected or estimated that the driving force of the engine 10 is not transferred to the rear wheel 3 is described next with reference to Figs. 10 and 11. Note that Figs. 10 and 11 illustrate a control flow of the origin location learning control.

First, in step S1, the main switch 33 is operated from ON to OFF. The operation of the main switch 33 from ON to OFF is performed in the same manner as in step S11 shown in Fig. 9. Even after the main switch 33 is operated from ON to OFF, the power supply to the ECU 7 is maintained by the self-preserving circuit 7c.

In step S2, it is determined whether the primary movable sheave body 21 b is located at a predetermined position or is closer to the origin location P₀ than the predetermined position on the axis of the input shaft 21d. The predetermined position is defined as a position relatively close to a position at which the transmission ratio is maximized within the use range of the primary movable sheave body 21b during traveling. According to the present embodiment, for ease of description, the predetermined position is referred to as a "movable starting position Ps". The movable starting position Ps is located on the input shaft 21d between a position at which the transmission ratio of the transmission 20 is minimized and a position at which the transmission ratio is maximized within the use range of the primary movable sheave body 21b during traveling. In addition, the position at which the transmission ratio is minimized and the position at which the transmission ratio is maximized slightly vary on the axis of the input shaft 21d in accordance with the set origin location P₀. Accordingly, the movable starting position Ps slightly varies on the axis of the input shaft 21d in accordance with the set origin location P₀. If, in step S2, the primary movable sheave body 21b is located at the movable starting position Ps or is closer to the origin location P₀ than the movable starting position Ps, the processing proceeds to step S3. However, if, in step S2, neither the primary movable sheave body 21b is located to the movable starting position Ps nor closer to the origin location P₀ than the movable starting position Ps, the processing returns to step S2. Note that the movable starting position Ps is stored in, for example, the memory 7b in accordance with the origin location P₀.

Subsequently, in step S3, after the main switch 33 is turned from ON to OFF, the motor 30 starts operating. In step S3, for example, the motor 30 operates as follows. A main SW signal based on the operation of the main switch 33 from ON to OFF is input to the ECU 7. After the ECU 7 receives the main SW signal, the target sheave speed 69 is output from the target sheave speed setting unit 103 to the subtracter unit 112 so that the primary movable sheave body 21b is driven at a predetermined speed. As described above, in the origin location learning control, the predetermined speed of the primary movable sheave body 21b is determined in advance and is stored in the memory 7b. The motor driving signal computing unit 104 outputs the PWM signal 60 to the drive circuit 8 on the basis of the target sheave speed 69 set as the predetermined speed. The drive circuit 8 applies, to the motor 30, the pulse voltage 61 in accordance with the input PWM signal 60. The motor 30 operates on the basis of the PWM signal 60 received from the motor driving signal computing unit 104.

In step S4, the motor 30 moves the primary movable sheave body 21b along the axis of the primary movable sheave body 21 b in a direction away from the primary stationary sheave body 21a. This moving direction indicates a direction in which the V-belt 23 moves towards the inner side in the radial direction of the primary sheave 21. Note that the ECU 7 functions as an origin location moving unit 121 when the processing in step S13 is performed. In this example, the origin location moving unit 121 includes the motor driving signal computing unit 104, the target sheave speed setting unit 103, and the memory 7b. In step S4, the primary movable sheave body 21b starts moving from the movable starting position Ps on the axis of the input shaft 21d.

In step S5, it is determined whether the movement of the primary movable sheave body 21b has been restricted by the above-described stopper. Whether the movement of the primary movable sheave body 21b has been restricted by the above-described stopper is determined by the origin location setting unit 122 on the basis of the actual sheave position 68 detected by the sheave position sensor 40. For example, whether the movement of the primary movable sheave body 21b has been restricted by the above-described stopper is determined if the actual sheave position 68 has not been changed with respect to the set target sheave speed 69. In addition, the origin location setting unit 122 sets the origin location P₀ on the basis of the detected actual sheave position 68. If, in step S5, the movement of the primary movable sheave body 21b has not been restricted by the above-described stopper, the processing proceeds to step S31. However, if, in step S5, the movement of the primary movable sheave body 21b has been restricted by the above-described stopper, the processing proceeds to step S51.

In step S31, it is determined whether the moving distance of the primary movable sheave body 21b moving on the axis of the input shaft 21d from the movable starting position Ps is within a predetermined range. That is, it is determined whether the origin location P₀ is shifted by more than or equal to a predetermined distance from the origin location P₀ set in the previous origin location learning control or from the initially set origin location P₀. More specifically, the origin location P₀ stored in the memory 7b is compared with the current location of the moving primary movable sheave body 21b. In this way, if the distance between the origin location P₀ and an update origin location P₀' described below is less than a predetermined range, the processing returns to step S3. However, if the distance between the origin location P₀ and an update origin location P₀' is greater than or equal to the predetermined range, the processing proceeds to step S41.

It should be noted that, in step S31, a method for determining whether the origin location P₀ is shifted by more than or equal to a predetermined distance from the origin location P₀ set in the previous origin location learning control or from the initially set origin location P₀ is not limited to the above-described method. The above-described determination whether the origin location P₀ is shifted by more than or equal to the predetermined distance may be made by determining whether an elapsed time period during which the primary movable sheave body 21b is moving towards the origin location P₀ reaches a predetermined time period. The elapsed time during which the primary movable sheave body 21b is moving towards the origin location P₀ can be computed by the time period computing unit 127. The predetermined time period is stored in the memory 7b.

In step S41, the operation of the motor 30 is stopped, and the movement of the primary movable sheave body 21b on the axis of the input shaft 21d is stopped. After the motor 30 is stopped in step S41, the processing proceeds to step S6. Step S6 is illustrated in Fig.11.

In step S51, the origin location setting unit 122 compares the origin location in the current origin location learning control (hereinafter referred to as an "update origin location P₀"') and the origin location P₀ in the previous origin location learning control. If, in step S51, the origin location P₀ is the same as the update origin location P₀', the processing proceeds to step S52. However, if, in step S51, the origin location P₀ is not the same as the update origin location P₀', the processing proceeds to step S53.

In steps S52 and S53, the update origin location P₀' set in step S51 is stored in the memory 7b. In step S52, the update origin location P₀' set in step S51 is output from the origin location setting unit 122 to the memory 7b. The memory 7b stores the update origin location P₀' while considering that the update origin location P₀' is the same as the origin location P₀ stored in the previous origin location learning control. In addition, in step S53, the update origin location P₀' set in step S51 is output from the origin location setting unit 122 to the memory 7b. The memory 7b stores the update origin location P₀' while replacing the origin location P₀ with the update origin location P₀' stored in the previous origin location learning control. In the next origin location learning control, the update origin location P₀' stored in the memory 7b is output to the origin location setting unit 122 as the origin location P₀. After the origin location P₀' is stored in the memory 7b in step S52 or S53, the processing proceeds to step S6.

In step S6, the motor 30 is operated so that the primary movable sheave body 21 b returns to the position at which the primary movable sheave body 21b was located when the origin location learning control was started.

In step S7, the motor 30 operates so that the primary movable sheave body 21b moves towards the primary stationary sheave body 21a on the axis of the input shaft 21d.

In step S8, it is determined whether the primary movable sheave body 21b is located at the movable starting position Ps. The location of the primary movable sheave body 21b is detected by the sheave position sensor 40. The sheave position sensor 40 outputs the actual sheave position 68 to the origin location setting unit 122. The origin location setting unit 122 determines whether the primary movable sheave body 21b is located at the movable starting position Ps on the basis of the actual sheave position 68. When the origin location setting unit 122 determines that the primary movable sheave body 21b is located at the movable starting position Ps, the transmission 20 completes the origin location learning control.

In step S9, since the origin location learning control is completed, the power supply from the main power supply 32 is turned OFF. Accordingly, the two-wheeled motor vehicle 1 has no power supply from the main power supply 32.

As shown in Figs. 9 and 10, step S6 is performed subsequent to step S52 or S53. However, step S6 may be started at the same time as step S51 is started. That is, the processing starting from step S6 to step S8 may be performed simultaneously with step S51 and one of steps S52 and S53.

### (Operation and Advantages)

As described above, the transmission 20 performs the origin location learning control in terms of the origin location P₀ of the primary movable sheave body 21b. By performing the origin location learning control, the transmission 20 can compute a precise transmission ratio during normal control. However, in order to optimally perform the origin location learning control and the normal control, these two controls need to be independently performed. Therefore, according to the present embodiment, the transmission 20 does not start the origin location learning control if the two-wheeled motor vehicle 1 is in a normal traveling state and the driving force of the engine 10 is transferred to the rear wheel 3. Thus, the transmission 20 does not prevent the two-wheeled motor vehicle 1 from moving as the rider desires. As a result, the two-wheeled motor vehicle 1 can reliably perform the origin location learning control. In addition, the two-wheeled motor vehicle 1 can smoothly move as the rider desires.

Furthermore, according to the present embodiment, the origin location learning control is not performed before the engine 10 is started. Therefore, the transmission 20 does not prevent the two-wheeled motor vehicle 1 from starting as the rider desires. Accordingly, the two-wheeled motor vehicle 1 can reliably perform the origin location learning control. In addition, the two-wheeled motor vehicle 1 can smoothly start as the rider desires. Since the origin location learning control is reliably performed, the control range of the transmission ratio of the transmission 20 can be corrected. As a result, the transmission 20 can compute a precise transmission ratio at all times.

The two-wheeled motor vehicle 1 has the relay circuit 36 including the relay switch 35. The relay switch 35 is turned ON when the main switch 33 is turned ON. In contrast, after the main switch 33 is turned OFF, the relay switch 35 maintains the ON state while the origin location moving unit 121 is moving the primary movable sheave body 21b. Therefore, even after the main switch 33 is turned OFF, the primary movable sheave body 21b can move to the origin location P₀ through the drive operation of the motor 30. As a result, the two-wheeled motor vehicle 1 can reliably perform the origin location learning control.

In addition, according to the present embodiment, the ECU 7 includes the traveling state determination unit 131. The traveling state determination unit 131 determines whether the driving force of the engine 10 is transferred to the rear wheel 3 using the vehicle speed 51, the actual input shaft rotation speed 55, or a clutch engagement and disengagement signal. Accordingly, the two-wheeled motor vehicle 1 can start and reliably perform the origin location learning control.

As noted above, the two-wheeled motor vehicle 1 can include the travel distance computing unit 128 that computes the travel distance. In such a case, the origin location learning control is performed after the two-wheeled motor vehicle 1 travels the predetermined travel distance Jp and, subsequently, the main switch 33 is turned from ON to OFF. When the main switch 33 is turned from ON to OFF, the main power supply 32 is not charged. Therefore, the two-wheeled motor vehicle 1 can reduce power consumption of the main power supply 32, as compared with the case where the origin location learning control is performed each time the main switch 33 is turned from ON to OFF. The predetermined travel distance Jp is defined as a distance in which proper performance of the transmission 20 is assured. Accordingly, even in a period for which the origin location learning control is not performed, the transmission 20 does not lose the function thereof, such as a function of changing a transmission ratio.

In addition, the transmission 20 includes the time period computing unit 127 that operates when the power supply of the main power supply 32 is turned ON and OFF. The time period computing unit 127 computes a predetermined time period. In the transmission 20, the origin location learning control is performed after the predetermined time period Sp has elapsed and, subsequently, the main switch 33 is turned from ON to OFF. Therefore, the two-wheeled motor vehicle 1 can reduce power consumption of the main power supply 32, as compared with the case where the origin location learning control is performed each time the main switch 33 is turned from ON to OFF. The predetermined time period is defined as a time period for which the good performance of the transmission 20 is assured. Accordingly, even in a period for which the origin location learning control is not performed, the transmission 20 does not lose the function thereof, such as a function of changing a transmission ratio.

Furthermore, the origin location learning control is started and performed when the primary movable sheave body 21b is located at the movable starting position Ps or is closer to the origin location P₀ than the movable starting position Ps. Accordingly, the moving distance of the primary movable sheave body 21b driven by the motor 30 is limited. Therefore, the two-wheeled motor vehicle 1 can reduce power consumption of the main power supply 32. The movable starting position Ps is defined as a position at which the primary movable sheave body 21b is relatively close to a position at which the transmission ratio is maximized. Accordingly, when the primary movable sheave body 21b is located at the movable starting position Ps or is closer to the origin location P₀ than the movable starting position Ps, the two-wheeled motor vehicle 1 does not perform excessive engine braking even if the motor 30 operates so as to move the primary movable sheave body 21b.

Still furthermore, according to the present embodiment, if the moving distance of the primary movable sheave body 21b to the origin location P₀ exceeds a predetermined moving distance, the origin location moving unit 121 stops the movement of the primary movable sheave body 21b to the origin location P₀. In addition, if the moving time of the primary movable sheave body 21b to the origin location P₀ exceeds a predetermined moving time, the origin location moving unit 121 can stop the movement of the primary movable sheave body 21b to the origin location P₀. That is, in such a case, the operation of the motor 30 is stopped. Accordingly, the two-wheeled motor vehicle 1 can reduce power consumption of the main power supply 32.

Yet still furthermore, according to the present embodiment, the two-wheeled motor vehicle 1 is used as an example of the vehicle. In saddle-ride type vehicles including the two-wheeled motor vehicle 1, the ON/OFF operation of an accelerator is cumbersome, as compared with the case of four-wheeled motor vehicles. That is, the rotation speed of the engine 10 is frequently changed, as compared with the case of four-wheeled motor vehicles. With frequent changes in the rotation speed, the power of the engine 10 is frequently changed. Accordingly, by including the transmission 20, the saddle-ride type vehicles can move using a transmission that can precisely change the transmission ratio. Therefore, the saddle-ride type vehicles can stably move with an appropriate transmission ratio.

### Second Embodiment

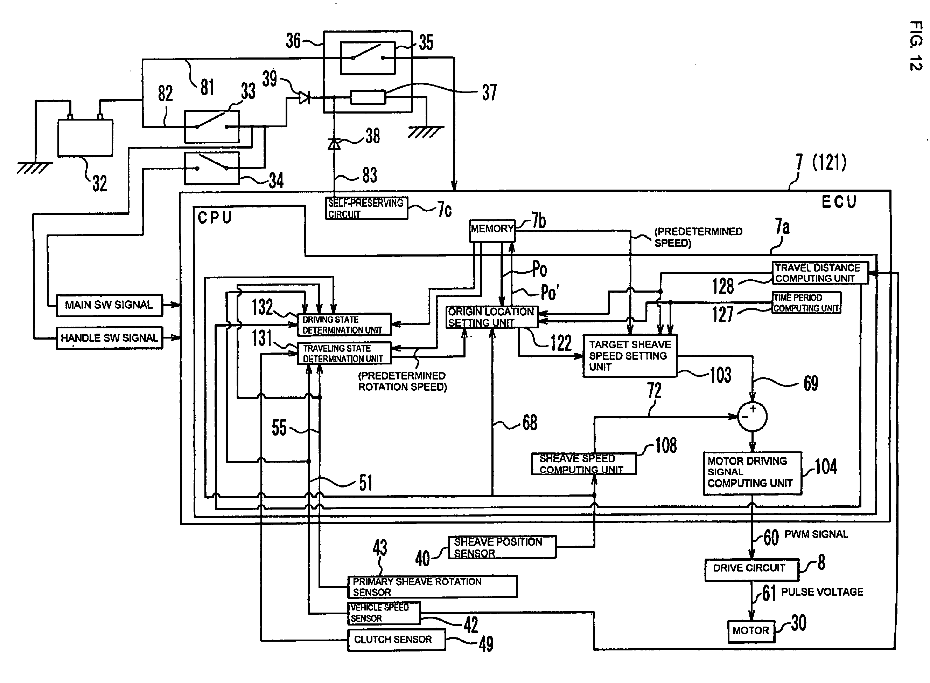

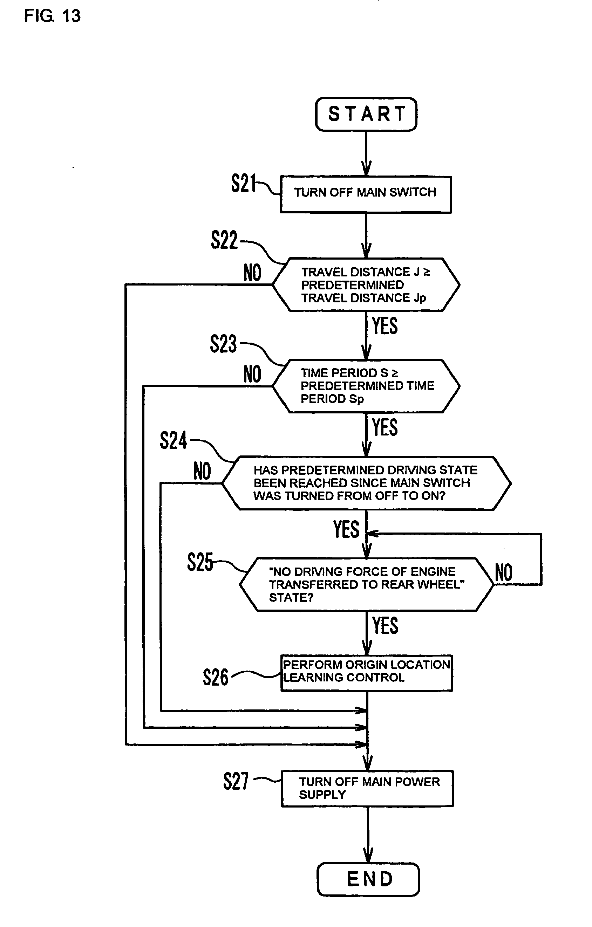

As noted above, the transmission 20 starts and performs the origin location learning control when the main switch 33 is operated from switch-OFF to switch-ON and if the driving force of the engine 10 is not transferred to the rear wheel 3. However, the transmission 20 may perform the origin location learning control when the two-wheeled motor vehicle 1 is in a predetermined driving state between the time the main switch 33 is turned from OFF to ON and the time the main switch 33 is turned from ON to OFF in addition to the case where the main switch 33 is operated from switch-OFF to switch-ON and the driving force of the engine 10 is not transferred to the rear wheel 3. An example of control to start and perform the origin location learning control according to the present embodiment is described next with reference to Figs. 12 and 13.

The same numbering will be used in describing the second embodiment as was utilized above in describing the first embodiment when the operation of the second embodiment is the same as that of the first embodiment, and the descriptions are not repeated. According to the present embodiment, step S21 shown in Fig. 13 is similar to step S11. In addition, step S22, step S23, step S25, step S26, and step S27 shown in Fig. 13 are similar to step S12, step S13, step S14, step S15, and step S16 shown in Fig. 9, respectively. Therefore, descriptions of step S21, step S22, step S23, step S25, step S26, and step S27 are not repeated.

After step S21, step S22, and step S23 are performed, it is determined in step S24 whether the two-wheeled motor vehicle 1 has been in a predetermined driving state between the time the main switch 33 was turned from OFF to ON and the time the main switch 33 was turned from ON to OFF. If, in step S24, it is determined that the two-wheeled motor vehicle 1 has not been in a predetermined driving state between the time the main switch 33 was turned from OFF to ON and the time the main switch 33 was turned from ON to OFF, the processing proceeds to step S27. However, if, in step S24, it is determined that the two-wheeled motor vehicle 1 has been in a predetermined driving state between the time the main switch 33 was turned from OFF to ON and the time the main switch 33 was turned from ON to OFF, the processing proceeds to step S26.

For example, whether the two-wheeled motor vehicle 1 has been in a predetermined driving state is determined by determining whether an engine rotation speed R higher than or equal to a predetermined engine rotation speed (an actual input shaft rotation speed) Rr is detected by the primary sheave rotation sensor 43. If the engine rotation speed R higher than or equal to a predetermined engine rotation speed (an actual input shaft rotation speed) Rr is not detected by the primary sheave rotation sensor 43, it is determined that the two-wheeled motor vehicle 1 has not been in a predetermined driving state. As shown in Fig. 12, the ECU 7 includes a driving state determination unit 132. The driving state determination unit 132 receives the actual input shaft rotation speed 55 from the primary sheave rotation sensor 43. On the other hand, the predetermined engine rotation speed Rr is stored in the memory 7b. The driving state determination unit 132 receives the predetermined engine rotation speed Rr from the memory 7b. The driving state determination unit 132 then compares the actual input shaft rotation speed 55 with the predetermined engine rotation speed Rr.

Alternatively, for example, whether the two-wheeled motor vehicle 1 has been in a predetermined driving state is determined by determining whether the rotation speed V higher than or equal to a predetermined rotation speed Vr of the rear wheel 3 is detected by the vehicle speed sensor 42. If the rotation speed V higher than or equal to a predetermined rotation speed Vr of the rear wheel 3 is not detected by the vehicle speed sensor 42, it is determined that the two-wheeled motor vehicle 1 has not been in a predetermined driving state. The driving state determination unit 132 receives the vehicle speed 51 from the vehicle speed sensor 42. On the other hand, the predetermined rotation speed Vr is stored in the memory 7b. The driving state determination unit 132 receives the predetermined rotation speed Vr from the memory 7b. The driving state determination unit 132 then compares the vehicle speed 51 with the predetermined rotation speed Vr.

Still alternatively, for example, whether the two-wheeled motor vehicle 1 has been in a predetermined driving state is determined by determining whether the primary movable sheave body 21b has moved to or has moved beyond a predetermined position (a reference position) Pr on the axis of the input shaft 21d. The position of the primary movable sheave body 21b on the axis of the input shaft 21d is detected by the sheave position sensor 40. If the primary movable sheave body 21b has not reached the reference position Pr, it is determined that the two-wheeled motor vehicle 1 has not been in a predetermined driving state. The driving state determination unit 132 receives the actual sheave position 68 from the sheave position sensor 40. On the other hand, the reference position Pr is stored in the memory 7b. The driving state determination unit 132 receives the reference position Pr from the memory 7b. The driving state determination unit 132 then compares the actual sheave position 68 with the reference position Pr.

Still alternatively, for example, whether the two-wheeled motor vehicle 1 has been in a predetermined driving state is determined by determining whether the two-wheeled motor vehicle 1 has traveled at least a predetermined travel distance Jr. The travel distance J of the two-wheeled motor vehicle 1 is detected by the travel distance computing unit 128. If the two-wheeled motor vehicle 1 has not traveled at least the predetermined travel distance Jr, it is determined that the two-wheeled motor vehicle 1 has not been in a predetermined driving state. The driving state determination unit 132 receives a signal (a travel distance signal) based on the travel distance J from the travel distance computing unit 128. On the other hand, the predetermined travel distance Jr is stored in the memory 7b. The driving state determination unit 132 receives a signal (a predetermined-travel-distance signal) based on the predetermined travel distance Jr from the memory 7b. The driving state determination unit 132 then compares the travel distance signal with the predetermined-travel-distance signal.

Note that, according to the present embodiment, the signal used for comparison performed by the driving state determination unit 132 may be a signal of any type. The driving state determination unit 132 may use one of the vehicle speed 51, the actual input shaft rotation speed 55, the actual sheave position 68, and the travel distance J for comparison. Alternatively, the driving state determination unit 132 may use all of the vehicle speed 51, the actual input shaft rotation speed 55, the actual sheave position 68, and the travel distance J for comparison. Still alternatively, the traveling state determination unit 131 may use combinations of the vehicle speed 51, the actual input shaft rotation speed 55, the actual sheave position 68, and the travel distance J for comparison. The target sheave speed setting unit 103 outputs the target sheave speed 69 to the subtracter unit 112 on the basis of one of the above-described comparison results or signals.

### (Operation and Advantages)

In this way, the transmission 20 can determine whether the two-wheeled motor vehicle 1 has been in a predetermined driving state since the main power supply was turned from OFF to ON. If the ECU 7 determines that the two-wheeled motor vehicle 1 has been in a predetermined driving state, the origin location moving unit 121 controls the movement of the primary movable sheave body 21b in a direction towards the origin location P₀. Through the movement of the primary movable sheave body 21b, the origin location setting unit 122 stores, in the memory 7b, the current origin location P₀ detected by the sheave position sensor 40 as a new origin location P₀'. As described above, when the main switch 33 is turned from ON to OFF, the main power supply 32 is not charged. Therefore, according to the present embodiment, if the two-wheeled motor vehicle 1 has been in a predetermined driving state since the main power supply was turned from OFF to ON, the origin location learning control can be performed. As a result, the two-wheeled motor vehicle 1 can reduce power consumption of the main power supply 32.

### First Modification

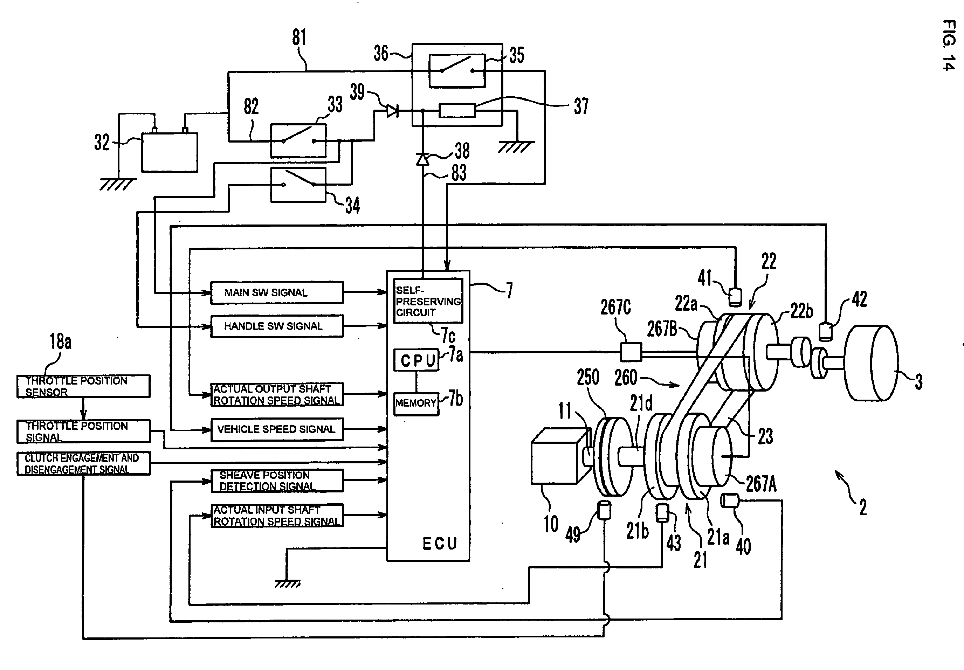

For example, as shown in Fig. 14, in place of the transmission 20 used in the above-described embodiments, a transmission (hereinafter referred to as a "belt-drive CVT") 260 that automatically changes the width of a groove of the primary sheave 21 or the secondary sheave 22 can be employed. Note that, the same numbering will be used in describing Fig. 14 as was utilized above in describing Fig. 5 if the members and parts perform the same operation.

The belt-drive CVT 260 includes a clutch 250, a primary sheave rotation sensor 43, hydraulic cylinders 267A and 267B, and a hydraulic control valve 267C.

The clutch 250 is disposed between an output shaft (a crankshaft) 11 of an engine 10 and an input shaft 21d of the belt-drive CVT 260. The clutch 250 starts and stops transfer of power between the crankshaft 11 of the engine 10 and the input shaft 21d of the belt-drive CVT 260. According to the present embodiment, the clutch 250 is an electronically controlled multiplate clutch. Accordingly, the engagement/disengagement operation of the clutch 250 is electronically and automatically controlled. When the clutch 250 is engaged, the driving force of the engine 10 is transferred to the primary sheave 21 via the clutch 250. The driving force transferred to the primary sheave 21 is further transferred to the secondary sheave 22 via a V-belt 23.

The primary sheave rotation sensor 43 detects the rotation speed of the primary sheave 21. The primary sheave rotation sensor 43 then outputs the detected rotation speed of the primary sheave 21 to the ECU 7 in the form of a sheave rotation speed signal.

The primary sheave 21 includes a primary stationary sheave body 21a and a primary movable sheave body 21b. The secondary sheave 22 includes a secondary stationary sheave body 22a and a secondary movable sheave body 22b. The primary movable sheave body 21b is configured so as to be movable in an axis direction of the input shaft 21d of the V-belt 23. The secondary movable sheave body 22b is configured so as to be movable in an axis direction of the output shaft 22d of the belt-drive CVT 260.

The primary sheave rotation sensor 43 detects the rotation speed of the primary sheave 21. According to the present modification, the ECU 7 computes the transmission ratio of the belt-drive CVT 260 using a ratio between a rotation speed (an actual input shaft rotation speed) of the primary sheave 21 detected by the primary sheave rotation sensor 43 and the vehicle speed of the vehicle detected by the vehicle speed sensor 42. More specifically, the transmission ratio of the belt-drive CVT 260 is computed by the ECU 7 using the ratio between an actual input shaft rotation speed signal and a vehicle speed signal. Note that the transmission ratio of the belt-drive CVT 260 may be computed using the ratio between the rotation speed of the primary sheave 21 detected by the primary sheave rotation sensor 43 and the rotation speed (an actual output shaft rotation speed) of the secondary sheave 22 detected by the secondary sheave rotation sensor 41. That is, the transmission ratio of the belt-drive CVT 260 may be computed by the ECU 7 using the ratio between the actual input shaft rotation speed signal and the actual output shaft rotation speed signal.

The hydraulic cylinder 267A controls the width of the groove of the primary sheave 21 (the distance between the primary movable sheave body 21b and the primary stationary sheave body 21a shown in Fig. 2). In the present modification, the hydraulic cylinder 267A applies a pressure force to the primary movable sheave body 21b of the primary sheave 21 so that the width of the groove of the primary sheave 21 is controlled. The hydraulic cylinder 267B controls the width of the groove of the secondary sheave 22 (the distance between the secondary movable sheave body 22b and the secondary stationary sheave body 22a shown in Fig. 2). In the present modification, the hydraulic cylinder 2678 applies a pressure force to the secondary movable sheave body 22b of the secondary sheave 22 so that the width of the groove of the secondary sheave 22 is controlled. The hydraulic control valve 267C is a valve used for controlling the hydraulic pressure applied to the hydraulic cylinders 267A and 267B. The hydraulic control valve 267C controls the hydraulic pressure so that, when the hydraulic control valve 267C increases the hydraulic pressure of the hydraulic cylinder 267A (267B), which is one of the hydraulic cylinders 267A and 267B, the hydraulic control valve 267C decreases the hydraulic pressure of the other hydraulic cylinder 267B (267A). The hydraulic control valve 267C is controlled by the ECU 7.

In the belt-drive CVT 260, by operating the hydraulic control valve 267C using the ECU 7, the transmission ratio of the belt-drive CVT 260 can be changed. The control performed by the ECU 7 is similar to those of the above-described embodiments. Note that, in the belt-drive CVT 260 of the present modification, the ECU 7 may use the rotation speed of the primary sheave 21 as a target control value, in place of the rotation speed of the engine 10.

### Other Modifications

In the origin location learning control performed in the above-described embodiments, as shown in Fig. 10, if, in step S31, the distance between the origin location P₀ and the update origin location P₀' is less than a predetermined range, the processing returns to step S3. However, if, in step S31, the distance between the origin location P₀ and the update origin location P₀' is greater than or equal to the predetermined range, the processing proceeds to step S41. However, even when, in step S31, the distance between the origin location P₀ and the update origin location P₀' is greater than or equal to the predetermined range, the processing may return to step S3, where the origin location learning control may be continuously performed.

### Definitions of Terms Used in Present Specification

As used herein, the term "V-belt 23" is referred to as a belt formed from a material of any type. For example, the V-belt 23 may be formed from an elastic material, such as rubber. Alternatively, the V-belt 23 may be formed from a metal.

As used herein, the term "vehicle" is referred to as the two-wheeled motor vehicle 1, as an example. However, the term "vehicle" is not limited to the two-wheeled motor vehicle 1. A vehicle may be a saddle-ride type vehicle, such as an ATV or a snowmobile. Alternatively, a vehicle may be a four-wheeled motor vehicle. According to the present invention, the term "vehicle" refers to any vehicle including an electronically controlled continuously variable transmission, such as the transmission 20.

### Industrial Applicability

The present invention is applicable to vehicles including an electronically controlled continuously variable transmission.

### Reference Numerals

1: two-wheeled motor vehicle (vehicle), 3: rear wheel (drive wheel), 7: ECU (control unit), 10: engine, 20: transmission (belt-drive continuously variable transmission), 21: primary sheave, 21a: primary stationary sheave body (stationary sheave body), 21b: primary movable sheave body (movable sheave body), 25: clutch, 30: motor (actuator), 32: main power supply, 33: main switch, 35: relay switch, 40: sheave position sensor, 42: vehicle speed sensor, 43: primary sheave rotation sensor (engine rotation speed sensor), 121: origin location moving unit, 122: origin location setting unit, 127: time period computing unit (time period computing means) (time measuring unit), 128: travel distance computing unit (travel distance computing means), 131: traveling state determination unit (state determination unit), 132: driving state determination unit, P₀: origin location, P₀': update origin location (new origin location)

## Claims

1. A vehicle comprising:
an engine (10) for generating a driving force;
a belt-drive continuously variable transmission (20, 260) including a stationary sheave body (21a) and a movable sheave body (21b), the movable sheave body (21b) displaceably facing the stationary sheave body (21a);
a drive wheel (3), the driving force of the engine (10) being arranged to be transferred to the drive wheel (3) via the belt-drive continuously variable transmission (20, 260);
an actuator (30) for moving the movable sheave body (21b);
a control unit (9) for controlling the actuator (30);
a sheave position sensor (40) for detecting a position of the movable sheave body (21b); and
a main switch (33);
wherein the control unit (9) includes a storage unit (7b) for storing an origin location (Po) of the movable sheave body (21b), a state determination unit (131, 132) for detecting or estimating that the driving force of the engine (10) is not transferred to the drive wheel (3), an origin location moving unit (121) for controlling movement of the movable sheave body (21b) towards the origin location (Po) when detecting or estimating that the main switch (33) is turned OFF and the driving force of the engine (10) is not transferred to the drive wheel (3), **characterized by** an origin location setting unit (122) for performing learning by causing the storage unit (7b) to store, as a new origin location (Po'), the current origin location (Po) detected by the sheave position sensor (40) on the basis of the control of the movable sheave body (21b) performed by the origin location moving unit (121).

2. A vehicle according to claim 1, **characterized by** a main power supply (32) for supplying electrical power to the actuator (30) and the control unit (9); and
a relay switch (35), the relay switch (35) being arranged to be turned ON in response to the turn-ON of the main switch (33) and to maintain the ON state while the origin location moving unit (121) is moving the movable sheave body (21b) after the main switch (33) is turned OFF.

3. A vehicle according to claim 1 or 2, **characterized by** an engine rotation speed sensor (43) for detecting a rotation speed (55, R) of the engine (10);
wherein the state determination unit (131, 132) is arranged to estimate that the driving force of the engine (10) is not transferred to the drive wheel (3) on the basis of the engine rotation speed (55, R) detected by the engine rotation speed sensor (43).

4. A vehicle according to claim 1 or 2, **characterized by** a clutch (25, 250) disposed between the belt-drive continuously variable transmission (20, 260) and the drive wheel (3), the clutch (25, 250) being arranged to engage and disengage rotation of the belt-drive continuously variable transmission (20, 260) with the drive wheel (3);
wherein the state determination unit (131, 132) is arranged to estimate that the driving force of the engine (10) is not transferred to the drive wheel (3) on the basis of disengagement of the clutch (25, 250).

5. A vehicle according to claim 1 or 2, **characterized by** a vehicle speed sensor (42) for detecting a speed (51, V) of the vehicle;
wherein the state determination unit (131, 132) is arranged to estimate that the driving force of the engine (10) is not transferred to the drive wheel (3) on the basis of a vehicle speed (51, V) detected by the vehicle speed sensor (42).

6. A vehicle according to any one of claims 1 to 5, **characterized in that** the control unit (9) further includes travel distance computing unit (128) for computing a travel distance (J), and wherein the origin location moving unit (121) is arranged to perform the control if the travel distance exceeds a predetermined travel distance (Jp, Jr) since the previously performed learning.

7. A vehicle according to any one of claims 1 to 5, wherein the control unit (9) further includes time period computing unit (127) for computing an elapsed time (S), and wherein the origin location moving unit (121) is arranged to perform the control if a predetermined time (Sp) has elapsed since the previously performed learning.

8. A vehicle according to any one of claims 1 to 7, **characterized in that** the origin location moving unit (121) is arranged to move the movable sheave body (21b) if a position of the movable sheave body (21b) detected by the sheave position sensor (40) is a predetermined position (Ps, Pr) located between a first position and second position or is closer to the origin location (Po) than the predetermined position (Ps, Pr), wherein a position of the movable sheave body (21b) at which a transmission ratio of the belt-drive continuously variable transmission (20, 260) is maximized is defined as the first position and the position at which the transmission ratio of the belt-drive continuously variable transmission (20, 260) is minimized is defined as second second position within a moving range of the movable sheave body (21b) during a traveling time, the origin location (Po) is on the opposite side of the first position from the second position.

9. A vehicle according to claim 1, **characterized by** a main power supply (32) for supplying electrical power to the actuator (30) and the control unit (9);
wherein the control unit (9) further includes a driving state determination unit (131, 132) for determining whether the vehicle has been in a predetermined driving state, and wherein the origin location moving unit (121) is arranged to perform the control if the vehicle has been in the predetermined driving state since the power supply from the main power supply (32) was turned from OFF to ON.

10. A vehicle according to claim 9, **characterized in that** the control unit (9) further includes travel distance computing unit (128) for computing a travel distance, and wherein the predetermined driving state is a state in which the travel distance of the vehicle exceeds a predetermined travel distance.

11. A vehicle according to claim 9, **characterized by** a vehicle speed sensor (42) for detecting a speed (51, V) of the vehicle;
wherein the predetermined driving state is a state in which the speed (51, V) of the vehicle exceeds a predetermined vehicle speed (Vp, Vr).

12. A vehicle according to claim 9, **characterized by** an engine rotation speed sensor (43) for detecting a rotation speed (55, R) of the engine (10);
wherein the predetermined driving state is a state in which the engine rotation speed (55, R) exceeds a predetermined engine rotation speed (Rp, Rr).

13. A vehicle according to claim 9, **characterized in that** the predetermined driving state is a state in which the movable sheave body (21b) moves beyond a predetermined position.

14. A vehicle according to any one of claims 1 to 13, **characterized in that** the origin location moving unit (121) is arranged to stop the movement of the movable sheave body (21b) towards the origin location (Po) if a moving distance of the movable sheave body (21b) moving towards the origin location (Po) exceeds a predetermined moving distance.

15. A vehicle according to any one of claims 1 to 13, **characterized in that** the control unit (9) further includes a time measuring unit for measuring a time, and the origin location moving unit (121) is arranged to stop the movement of the movable sheave body (21b) towards the origin location (Po) if a travel time of the movable sheave body (21b) moving towards the origin location (Po) exceeds a predetermined time.

16. A vehicle according to any one of claims 1 to 15, **characterized in that** the vehicle is of a saddle-ride type.

## Patentansprüche

1. Fahrzeug, aufweisend:
ein riemengetriebenes stufenlos veränderbares Getriebe (20, 260), enthaltend einen stationären Scheibenkörper (21a) und einen bewegbaren Scheibenkörper (21b), wobei der bewegbare Scheibenkörper (21b) verlagerbar dem stationären Scheibenkörper (21a) zugewandt ist;
ein Antriebsrad (3), wobei die Antriebskraft der Brennkraftmaschine (10) vorgesehen ist, auf das Antriebsrad (3) über das riemengetriebene stufenlos veränderbare Getriebe (20, 260) übertragen zu werden;
einen Betätiger (30) zum Bewegen des bewegbaren Scheibenkörpers (21b);
eine Steuerungseinheit (9) zum Steuern des Betätigers (30);
einen Scheibenpositionssensor (40) zum Erfassen einer Position des bewegbaren Scheibenkörpers (21b); und
einen Hauptschalter (33);
wobei die Steuerungseinheit (9) eine Speichereinheit (7b) zum Speichern eines Ausgangsortes (Po) des bewegbaren Scheibenkörpers (21b) enthält, eine Zustandserfassungseinheit (131, 132) zum Erfassen oder Abschätzen, dass die Antriebskraft der Brennkraftmaschine (10) nicht auf das Antriebsrad (3) übertragen wird, eine Ausgangsort- Bewegungseinheit (121) zum Steuern der Bewegung des bewegbaren Scheibenkörpers (21b) in Richtung zu dem Ausgangsort (Po), wenn erfasst oder abgeschätzt wird, dass der Hauptschalter (33) AUS geschaltet ist und die Antriebskraft der Brennkraftmaschine (10) nicht auf das Antriebsrad (3) übertragen wird, **gekennzeichnet durch** eine Ausgangsort- Festlegungseinheit (122) zum Ausführenden eines Lernens **durch** Veranlassen der Speichereinheit (7b) als einen neuen Ausgangsort (Po') den momentanen Ausgangsort (Po) zu speichern, erfasst **durch** den Scheibenpositionssensor (40) auf der Grundlage der Steuerung des bewegbaren Scheibenkörpers (21b), ausgeführt **durch** die Ausgangsort- Bewegungseinheit (121).

2. Fahrzeug nach Anspruch 1, **gekennzeichnet durch** eine Hauptenergiezuführung (32) zum Zuführen elektrischer Energie zu dem Betätiger (30) und der Steuerungseinheit (9); und einen Relaisschalter (35), wobei der Relaisschalter (35) vorgesehen ist, in Abhängigkeit von dem Einschalten des Hauptschalters auf EIN geschaltet zu werden, und den EIN- Zustand beizubehalten, während die Ausgangsort- Bewegungseinheit (121) den bewegbaren Scheibenkörper (21b) bewegt, nachdem der Hauptschalter (33) auf AUS geschaltet ist.

3. Fahrzeug nach Anspruch 1 oder 2, **gekennzeichnet durch** einen Motordrehzahlsensor (43) zum Erfassen einer Drehzahl (55, R) der Brennkraftmaschine (10);
wobei die Zustandserfassungseinheit (131, 132) vorgesehen ist, auf der Grundlage der Motordrehzahl (55, R), erfasst **durch** den Motordrehzahlsensor (43), abzuschätzen, dass die Antriebskraft der Brennkraftmaschine (10) nicht auf das Antriebsrad (3) übertragen wird.

4. Fahrzeug nach Anspruch 1 oder 2, **gekennzeichnet durch** eine Kupplung (25, 250), angeordnet zwischen dem riemengetriebenen stufenlos veränderbaren Getriebe (20, 260) und dem Antriebsrad (3), wobei die Kupplung (25, 250) vorgesehen ist, die Drehung des riemengetriebenen stufenlos veränderbaren Getriebes (20, 260) mit dem Antriebsrad (3) in Eingriff zu bringen oder außer Eingriff zu bringen;
wobei die Zustandserfassungseinheit (131, 132) vorgesehen ist, auf der Grundlage des Außer- Eingriffs der Kupplung (25, 250) abzuschätzen, dass die Antriebskraft der Brennkraftmaschine (10) nicht auf das Antriebsrad (3) übertragen wird.

5. Fahrzeug nach Anspruch 1 oder 2, **gekennzeichnet durch** einen Fahrzeuggeschwindigkeitssensor (42) zum Erfassen einer Geschwindigkeit (51, V) des Fahrzeuges;
wobei die Zustandserfassungseinheit (131, 132) vorgesehen ist, auf der Grundlage der Fahrzeuggeschwindigkeit (51, V), erfasst **durch** den Fahrzeuggeschwindigkeitssensor (42), abzuschätzen, dass die Antriebskraft der Brennkraftmaschine (10) nicht auf das Antriebsrad (3) übertragen wird.

6. Fahrzeug nach einem der Ansprüche 1 bis 5, **dadurch gekennzeichnet, dass** die Steuerungseinheit (9) außerdem eine Fahrentfernungs- Berechnungseinheit (128) zum Berechnen der Fahrentfernung (J) aufweist und wobei die Ausgangsort- Bewegungseinheit (121) vorgesehen ist, die Steuerung auszuführen, wenn die Fahrentfernung eine vorbestimmte Fahrentfernung (Jp, Jr) seit dem zuvor ausgeführten Lernen überschreitet.

7. Fahrzeug nach einem der Ansprüche 1 bis 5, **dadurch gekennzeichnet, dass** die Steuerungseinheit (9) außerdem eine Zeitdauer- Berechnungseinheit (127) zum Berechnen einer vergangenen Zeit (S) enthält und wobei die Ausgangsort-Bewegungseinheit (121) vorgesehen ist, eine Steuerung auszuführen, wenn eine vorbestimmte Zeit (Sp) seit dem zuvor ausgeführten Lernen vergangen ist.

8. Fahrzeug nach einem der Ansprüche 1 bis 7, **dadurch gekennzeichnet, dass** die Ausgangsort- Bewegungseinheit (121) vorgesehen ist, den bewegbaren Scheibenkörper (21b) zu bewegen, wenn eine Position des bewegbaren Scheibenkörpers (21b), erfasst durch den Scheibenpositionssensor (40), eine vorbestimmte Position (Ps, Pr) ist, angeordnet zwischen einer ersten Position und zweiten Position, oder näher zu dem Ausgangsort (Po) als die vorbestimmte Position (Ps, Pr) ist, wobei eine Position des bewegbaren Scheibenkörpers (21b), bei dem ein Übersetzungsverhältnis des riemengetriebenen stufenlos veränderbaren Getriebes (20, 260) maximiert ist, als die erste Position definiert ist und die Position, bei der das Übersetzungsverhältnis des riemengetriebenen stufenlos veränderbaren Getriebes (20, 260) minimiert ist, als zweite Position innerhalb eines Bewegungsbereiches des bewegbaren Scheibenkörpers (21b) während der Fahrzeit definiert ist, wobei der Ausgangsort (Po) auf der gegenüberliegenden Seite der ersten Position von der zweiten Position ist.

9. Fahrzeug nach Anspruch 1, **gekennzeichnet durch** eine Hauptenergiezuführung (32) zum Zuführen elektrischer Energie zu dem Betätiger (30) und der Steuerungseinheit (9);
wobei die Steuerungseinheit (9) außerdem eine Antriebszustand- Bestimmungseinheit (131, 132) enthält, um zu bestimmen, ob das Fahrzeug in einem vorbestimmten Antriebszustand gewesen ist, und wobei die Ausgangsort- Bewegungseinheit (121) vorgesehen ist, eine Steuerung auszuführen, wenn das Fahrzeug in dem vorbestimmten Antriebszustand gewesen ist seit die Energiezuführung von der Hauptenergiezuführung (32) von AUS auf EIN geschaltet wurde.

10. Fahrzeug nach Anspruch 9, **dadurch gekennzeichnet, dass** die Steuerungseinheit (9) außerdem eine Fahrentfernungs- Berechnungseinheit (128) zum Berechnen einer Fahrentfernung enthält und wobei die vorbestimmte Fahrentfernung ein Zustand ist, in dem die Fahrentfernung des Fahrzeuges eine vorbestimmte Fahrentfernung überschreitet.

11. Fahrzeug nach Anspruch 9, **gekennzeichnet durch** einen Fahrzeuggeschwindigkeitssensor (42) zum Erfassen einer Geschwindigkeit (51, V) des Fahrzeuges;
wobei der vorbestimmte Antriebszustand ein Zustand ist, in dem die Geschwindigkeit (51, V) des Fahrzeuges eine vorbestimmte Fahrzeuggeschwindigkeit (Vp, Vr) überschreitet.

12. Fahrzeug nach Anspruch 9, **gekennzeichnet durch** einen Motordrehzahlsensor (43) zum Erfassen einer Drehzahl (55, R) der Brennkraftmaschine (10);
wobei der vorbestimmte Antriebszustand ein Zustand ist, in dem die Motordrehzahl (66, R) eine vorbestimmte Motordrehzahl (Rp, Rr) überschreitet.

13. Fahrzeug nach Anspruch 9, **dadurch gekennzeichnet, dass** der vorbestimmte Antriebszustand ein Zustand ist, in dem sich der bewegbare Scheibenkörper (21b) hinter eine vorbestimmte Position bewegt.

14. Fahrzeug nach einem der Ansprüche 1 bis 13, **dadurch gekennzeichnet, dass** die Ausgangsort- Bewegungseinheit (121) vorgesehen ist, die Bewegung des bewegbaren Scheibenkörpers (21b) in Richtung zu dem Ausgangsort (Po) zu stoppen, wenn eine Bewegungsentfernung des bewegbaren Scheibenkörpers (21b), der sich in Richtung zu dem Ausgangsort (Po) bewegt, eine vorbestimmte Bewegungsentfernung überscheitet.

15. Fahrzeug nach einem der Ansprüche 1 bis 13, **dadurch gekennzeichnet, dass** die Steuerungseinheit (9) außerdem eine Zeitmesseinheit zum Messen einer Zeit enthält und die Ausgangsort- Bewegungseinheit (121) vorgesehen ist, die Bewegung des bewegbaren Scheibenkörpers (21b) in Richtung zu dem Ausgangsort (Po) zu stoppen, wenn eine Fahrzeit des bewegbaren Scheibenkörpers (21b), der sich in Richtung zu dem Ausgangsort (Po) bewegt, eine vorbestimmte Zeit überschreitet.

16. Fahrzeug nach einem der Ansprüche 1 bis 15, **dadurch gekennzeichnet, dass** das Fahrzeug von einem Grätschsitz- Typ ist.

## Revendications

1. Véhicule comportant :
un moteur (10) destiné à générer une force motrice ;
une transmission à variation continue par courroie (20, 260), comprenant un corps de poulie fixe (21a) et un corps de poulie mobile (21b), le corps de poulie mobile (21b) se trouvant en opposition avec le corps de poulie fixe (21a), tout en restant mobile ;
une roue motrice (3), la force motrice du moteur (10) étant prévue pour être transférée à la roue motrice (3) via la transmission à variation continue par courroie (20, 260) ;
un actionneur (30) destiné à déplacer le corps de poulie mobile (21b) ;
une unité de commande (9) destinée à commander l'actionneur (30)
un capteur de position de poulie (40) destiné à détecter une position du corps de poulie mobile (21b) ; et
un interrupteur principal (33) ;
dans lequel l'unité de commande (9) comprend une unité de stockage (7b) destinée à stocker une localisation d'origine (Po) du corps de poulie mobile (21b), une unité de détermination d'état (131, 132) destinée à détecter ou estimer que la force motrice du moteur (10) n'est pas transférée à la roue motrice (3), une unité de déplacement de localisation d'origine (121) destinée à commander le mouvement du corps de poulie mobile (21b) en direction de la localisation d'origine (Po) lors de la détection ou de l'estimation d'un état dans lequel l'interrupteur principal (33) est désactivé (OFF) et la force de motrice du moteur (10) n'est pas transférée vers la roue motrice (3), **caractérisé par** une unité de définition de localisation d'origine (122) permettant d'effectuer un apprentissage en provoquant le stockage par l'unité de stockage (7b), à titre de nouvelle localisation d'origine (Po'), de la localisation d'origine présente (Po) détectée par le capteur de position de poulie (40) en se basant sur la commande du corps de poulie mobile (21b) mise en oeuvre par l'unité de déplacement de localisation d'origine (121).

2. Véhicule selon la revendication 1, **caractérisé par** une alimentation électrique principale (32) destinée à assurer l'alimentation en énergie électrique de l'actionneur (30) et de l'unité de commande (9) ; et un relais commutateur (35), le relais commutateur (35) étant conçu pour être activé (ON) en réponse à l'activation de l'interrupteur principal (33) et pour maintenir l'état activé (ON) alors que l'unité de déplacement de localisation d'origine (121) déplace le corps de poulie mobile (21b) après que l'interrupteur principal (33) ait été désactivé (OFF).

3. Véhicule selon la revendication 1 ou 2, **caractérisé par** un capteur de vitesse de rotation de moteur (43) destiné à détecter une vitesse de rotation (55, R) du moteur (10) ;
dans lequel l'unité de détermination d'état (131, 132) est conçue pour estimer que la force de motrice du moteur (10) n'est pas transférée à la roue motrice (3) en se basant sur la vitesse de rotation de moteur (55, R) détectée par le capteur de vitesse de rotation de moteur.

4. Véhicule selon la revendication 1 ou 2, **caractérisé par** un embrayage (25, 250) disposé entre la transmission à variation continue par courroie (20, 260) et la roue motrice (3), l'embrayage (25, 250) étant conçu pour enclencher et désenclencher la rotation de la transmission à variation continue par courroie (20, 260) avec la roue motrice (3) ;
dans lequel l'unité de détermination d'état (131, 132) est conçue pour estimer que la force motrice du moteur (10) n'est pas transférée à la roue motrice (3) en se basant sur le désenclenchement de l'embrayage (25, 250).

5. Véhicule selon la revendication 1 ou 2, **caractérisé par** un capteur de vitesse de véhicule (42) destiné à détecter une vitesse (51, V) du véhicule ;
dans lequel l'unité de détermination d'état (131, 132) est conçue pour estimer que la force motrice du moteur (10) n'est pas transférée à la roue motrice (3) en se basant sur une vitesse de véhicule (51, V) détectée par le capteur de vitesse de véhicule (42).

6. Véhicule selon l'une quelconque des revendications 1 à 5, **caractérisé en ce que** l'unité de commande (9) comporte en outre une unité de calcul de distance de trajet (128) destinée à calculer une distance de trajet (J), et dans lequel l'unité de déplacement de localisation d'origine (121) est conçue pour procéder à la commande si la distance de trajet dépasse une distance de trajet prédéterminée (Jp, Jr) depuis l'apprentissage précédemment réalisé.

7. Véhicule selon l'une quelconque des revendications 1 à 5, dans lequel l'unité de commande (9) comporte en outre une unité de calcul de période (127) destinée à calculer un temps écoulé (S), dans lequel l'unité de déplacement de localisation d'origine (121) est conçue pour mettre en oeuvre la commande si un temps prédéterminé (Sp) s'est écoulé depuis l'apprentissage précédemment réalisé.

8. Véhicule selon l'une quelconque des revendications 1 à 7, **caractérisé en ce que** l'unité de déplacement de localisation d'origine (121) est conçue pour déplacer le corps de poulie mobile (21b) si une position du corps de poulie mobile (21b) détectée par le capteur de position de poulie (40) est une position prédéterminée (Ps, Pr) située entre une première position et une seconde position, ou est plus proche de la localisation d'origine (Po) que la position prédéterminée (Ps, Pr), dans lequel une position du corps de poulie mobile (21b), dans laquelle est maximisé un rapport de transmission de la transmission à variation continue par courroie (20, 260), est définie à titre de première position, et la position, dans laquelle est minimisé le rapport de transmission de la transmission à variation continue par courroie (20, 260), est définie à titre de seconde position dans un intervalle de déplacement du corps de poulie mobile (21b) au cours d'un temps de trajet, la localisation d'origine (Po) se trouve du côté opposé de la première position par rapport à la seconde position.

9. Véhicule selon la revendication 1, **caractérisé par** une alimentation électrique principale (32) pour assurer l'alimentation en énergie électrique de l'actionneur (30) et l'unité de commande (9) ;
dans lequel l'unité de commande (9) comprend en outre une unité de détermination d'état de conduite (131, 132) pour déterminer si le véhicule se trouvait dans un état de conduite prédéterminé, et dans lequel l'unité de déplacement de localisation d'origine (121) est conçue pour mettre en oeuvre la commande si le véhicule s'est trouvé dans l'état de conduite prédéterminé depuis le passage de l'alimentation électrique issue de l'alimentation électrique principale (32) de l'état désactivé (OFF) à l'état activé (ON).

10. Véhicule selon la revendication 9, **caractérisé en ce que** l'unité de commande (9) comprend en outre une unité de calcul de distance de trajet (128) destinée à calculer une distance de trajet, et dans lequel l'état de conduite prédéterminé est un état dans lequel la distance de trajet du véhicule dépasse une distance de trajet prédéterminée.

11. Véhicule selon la revendication 9, **caractérisé par** un capteur de vitesse de véhicule (42) destiné à détecter une vitesse (51, V) du véhicule ;
dans lequel l'état de conduite prédéterminé est un état dans lequel la vitesse (51, V) du véhicule dépasse une vitesse de véhicule prédéterminée (Vp, Vr).

12. Véhicule selon la revendication 9, **caractérisé par** un capteur de vitesse de rotation de moteur (43) destiné à détecter une vitesse de rotation (55, R) du moteur (10) ;
dans lequel l'état de conduite prédéterminé est un état dans lequel la vitesse de rotation de moteur (55, R) dépasse une vitesse de rotation de moteur prédéterminée (Rp, Rr).

13. Véhicule selon la revendication 9, **caractérisé en ce que** l'état de conduite prédéterminé est un état dans lequel le corps de poulie mobile (21b) se déplace au-delà d'une position prédéterminée.

14. Véhicule selon l'une quelconque des revendications 1 à 13, **caractérisé en ce que** l'unité de déplacement de localisation d'origine (121) est conçue pour arrêter le mouvement du corps de poulie mobile (21b) en direction de la localisation d'origine (Po) si une distance de déplacement du corps de poulie mobile (21b) se déplaçant en direction de la localisation d'origine (Po) dépasse une distance de déplacement prédéterminée.

15. Véhicule selon l'une quelconque des revendications 1 à 13, **caractérisé en ce que** l'unité de commande (9) comprend en outre une unité de mesure de temps permettant de mesurer un temps, et l'unité de déplacement de localisation d'origine (121) est conçue pour arrêter le mouvement du corps de poulie mobile (21b) en direction de la localisation d'origine (Po) si un temps de déplacement du corps de poulie mobile (21b) se déplaçant en direction de la localisation d'origine (Po) dépasse un temps prédéterminé.

16. Véhicule selon l'une quelconque des revendications 1 à 15, **caractérisé en ce que** le véhicule se conduit à califourchon.
